(19)

Europäisches
Patentamt
European
Patent Office
Office européen
des brevets

(11)     **EP 3 396 764 B1**

(12)                              **EUROPEAN PATENT SPECIFICATION**

(45) Date of publication and mention
of the grant of the patent:
**05.02.2020  Bulletin 2020/06**

(21) Application number: **16878284.5**

(22) Date of filing: **30.11.2016**

(51) Int Cl.:
***H01M 8/04858*** (2016.01)     ***H01M 8/04537*** (2016.01)

(86) International application number:
**PCT/JP2016/085495**

(87) International publication number:
**WO 2017/110390 (29.06.2017 Gazette 2017/26)**

(54) **FUEL CELL SYSTEM AND FUEL CELL SYSTEM CONTROL METHOD**

BRENNSTOFFZELLENSYSTEM UND
BRENNSTOFFZELLENSYSTEMSTEUERUNGSVERFAHREN

SYSTÈME DE PILE À COMBUSTIBLE ET PROCÉDÉ DE COMMANDE DE SYSTÈME DE PILE À
COMBUSTIBLE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **25.12.2015  JP 2015254162**

(43) Date of publication of application:
**31.10.2018  Bulletin 2018/44**

(73) Proprietor: **NISSAN MOTOR CO., LTD.
Yokohama-shi, Kanagawa 221-0023 (JP)**

(72) Inventors:
  • **KUMADA, Mitsunori
    Atsugi-shi
    Kanagawa 243-0123 (JP)**

  • **YAGUCHI, Tatsuya
    Atsugi-shi
    Kanagawa 243-0123 (JP)**
  • **SUZUKI, Kenta
    Atsugi-shi
    Kanagawa 243-0123 (JP)**

(74) Representative: **Grünecker Patent- und
Rechtsanwälte
PartG mbB
Leopoldstraße 4
80802 München (DE)**

(56) References cited:
**EP-A1- 2 385 572       JP-A- 2012 253 948
JP-A- 2012 253 948     JP-A- 2014 022 246
JP-A- 2014 072 144     JP-A- 2014 099 801
JP-A- 2014 192 075     US-A1- 2006 113 129**

**Description**

TECHNICAL FIELD

The present invention relates to a fuel cell system which outputs a generated power of a fuel cell to a secondary battery and a method for controlling a fuel cell system.

BACKGROUND ART

US 2014/113162 A1 discloses in its specification a fuel cell system provided with a solid oxide fuel cell which receives a fuel and generates a power in accordance with a load.

US 2006/113129 A1, which is seen as the closest prior art, describes a hybrid vehicle having a motor and a heat engine as power sources, and a fuel cell and a secondary battery as electric power supplies of said motor. The output ratio of the fuel cell is gradually lowered while the output ratio of the engine is gradually heightened, with a decrease in remaining quantity of the fuel for the fuel cell.

From EP 2 385 572 A1, a fuel cell system is known including a control unit configured to perform an operation for stopping the power generation of a fuel cell or an operation for decreasing the amount of power generated, when the remaining amount of fuel is equal to or less than a predetermined value.

A fuel cell system with an instruction part instructing the power generation start to a fuel cell when the remaining charged capacity of a secondary battery becomes equal to or less than a threshold is disclosed in JP 2012 253948 A. An update part updates the threshold in accordance with the detection result of a travel condition detection part which detects a travel condition of a vehicle.

SUMMARY OF INVENTION

The fuel cell system as mentioned above can also be used as the system in which in order to ensure an output of a secondary battery the generated power of a fuel cell is charged to a secondary battery which supplies a power to a load such as, for example, a motor.

In the system like this, when the fuel cell is started up from the stopped state thereof, or power generation of the fuel cell is increased, temperature of the fuel cell needs to be raised to the action temperature suitable for power generation; and thus, besides a fuel for power generation, a fuel for warming up the fuel cell is necessary.

Therefore, during start-up of the fuel cell or when the power generation thereof is increased, consumption of the fuel not contributing to charging of the secondary battery increases; and thus, as the number of repeat in start-up of the fuel cell and increase of power generation is increased, with responding it, the fuel consumption of the fuel cell system deteriorates.

The present invention was made in view of the problem mentioned above. Therefore, the present invention has an object to provide the fuel cell system with which deterioration in the fuel consumption is suppressed while ensuring the output of the secondary battery, and also to provide the method for controlling the fuel cell system.

According to an aspect of this invention, there is provided a method for controlling a fuel cell system in which a fuel and an oxidant are supplied to a fuel cell and a generated power from the fuel cell is outputted to a secondary battery. The method includes a charged amount acquisition step in which a charged amount of the secondary battery is acquired, a power generation control step in which when the charged amount of the secondary battery becomes equal to or less than a prescribed value, the fuel cell is started up from a state that the fuel cell stops power generation, or the generated power of the fuel cell is increased, a fuel amount acquisition step in which a remaining amount of the fuel which can be supplied to the fuel cell is acquired, and a setting step in which when the remaining amount of the fuel becomes small, the prescribed value is set to a smaller value as compared with when the remaining amount of the fuel is large.

BRIEF DESCRIPTION OF DRAWINGS

[Fig. 1]

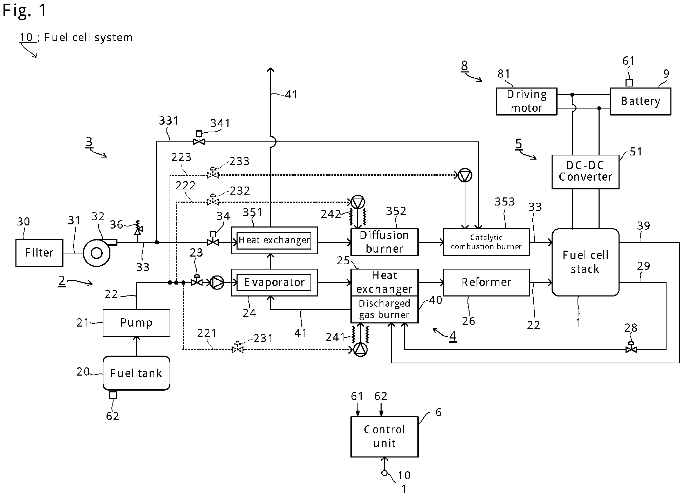

Fig. 1 is a block diagram showing main components of the fuel cell system in the first embodiment of the present invention.
[Fig. 2]

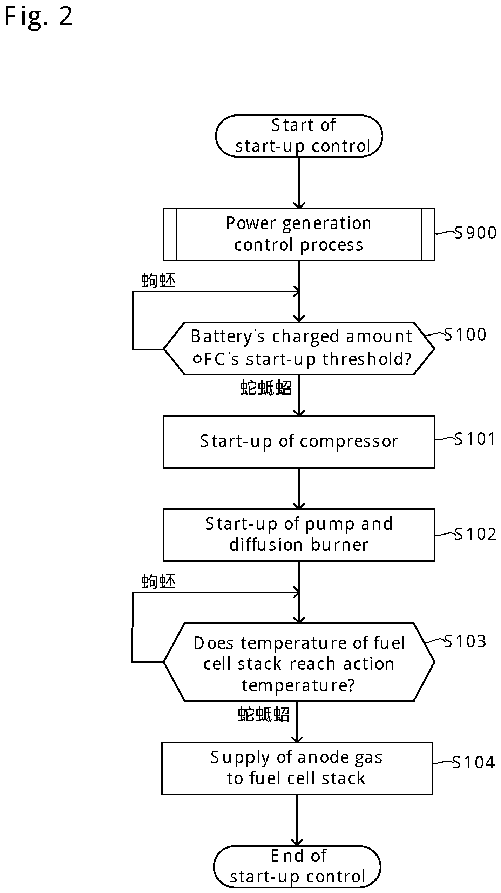

Fig. 2 is a flow chart showing one example of the start-up method of the fuel cell system in this embodiment.
[Fig. 3]

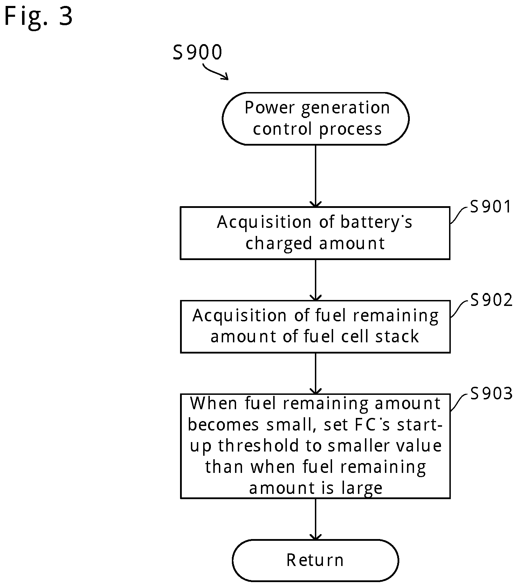

Fig. 3 is a flow chart exemplifying content of the power generation control process of the fuel cell in this embodiment.
[Fig. 4]

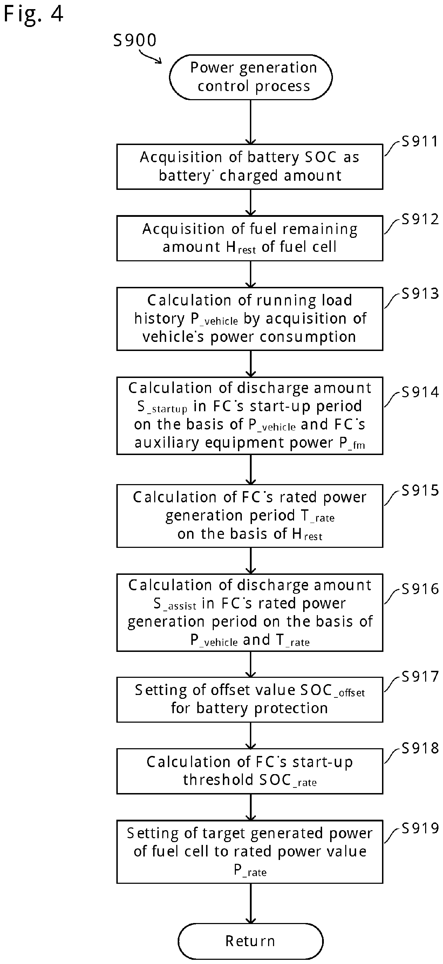

Fig. 4 is a flow chart exemplifying content of the power generation control process of the fuel cell in the second embodiment of the present invention.
[Fig. 5]

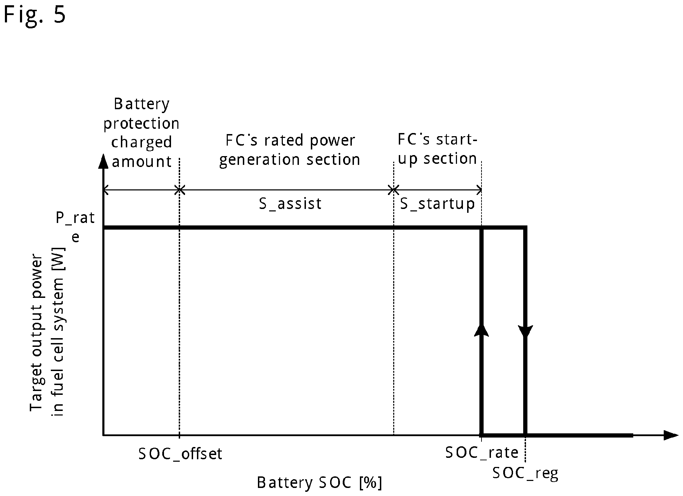

Fig. 5 is an explanatory figure showing the relationship between the charged amount of the battery and the generated power of the fuel cell in this embodiment.
[Fig. 6]

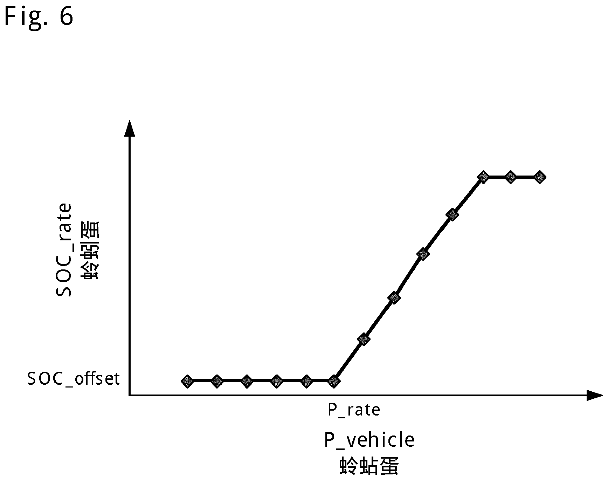

Fig. 6 is an explanatory figure showing one example of the setting method with which an FC's start-up threshold which determines the start-up timing of the fuel cell stack is set in accordance with the running load history.
[Fig. 7]

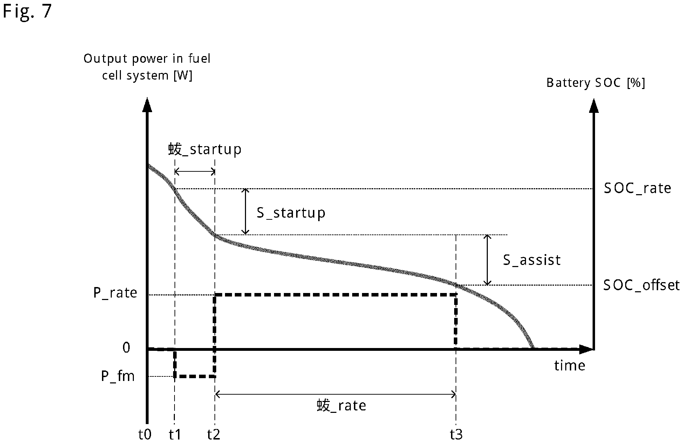

Fig. 7 is a time chart showing the change of a generated power of the fuel cell in accordance with charged amount of the battery.
[Fig. 8]

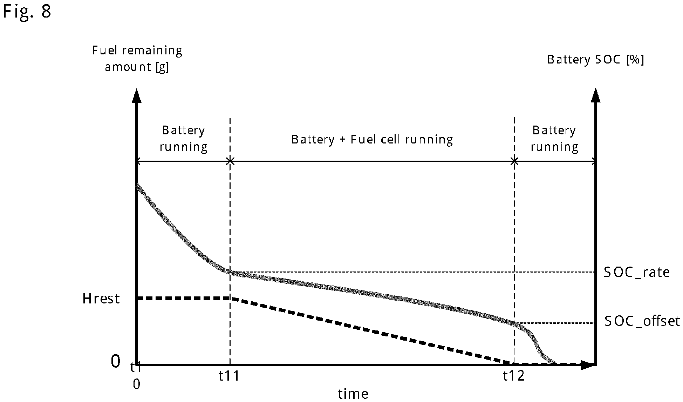

Fig. 8 is a time chart showing the change of remaining amount of the fuel in accordance with the charged amount of the battery.
[Fig. 9]

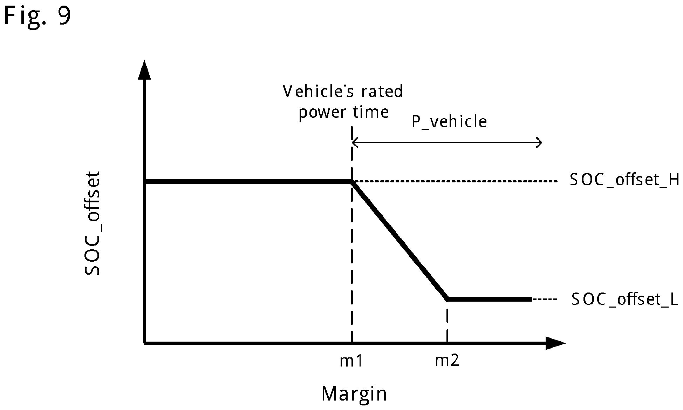

Fig. 9 is an explanatory figure showing one example of the setting method with which the offset value that is determined for the battery protection is set in accordance with the battery margin.
[Fig. 10]

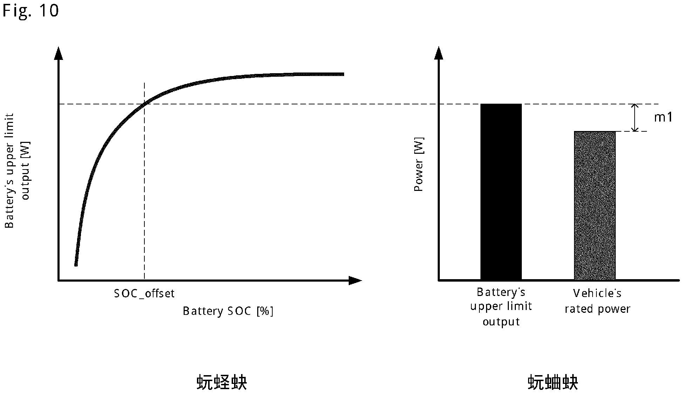

Fig. 10 is an explanatory figure showing one example of the calculation method of the battery margin.
[Fig. 11]

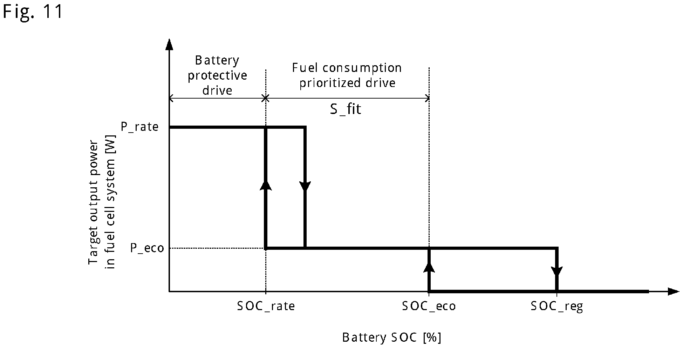

Fig. 11 is an explanatory figure exemplifying the relationship between the charged amount of the battery and the generated power of the fuel cell in the third embodiment of the present invention.
[Fig. 12]

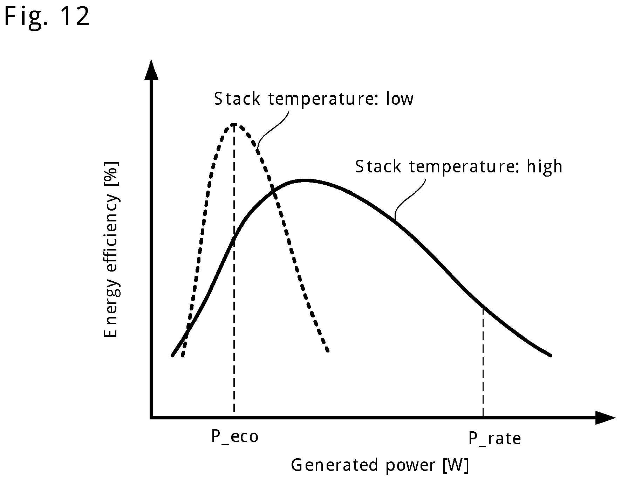

Fig. 12 is an explanatory figure showing the energy efficiency of the fuel cell in the fuel consumption prioritized drive and the battery protective drive.
[Fig. 13]

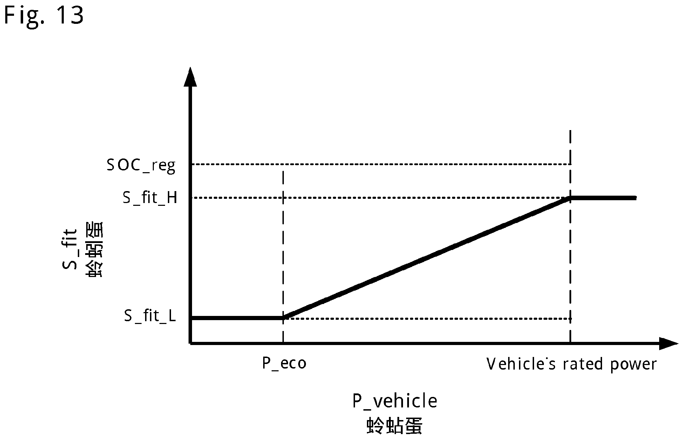

Fig. 13 is a figure showing one example of the setting method with which a section of the fuel consumption prioritized drive is set in accordance with the running load history.
[Fig. 14]

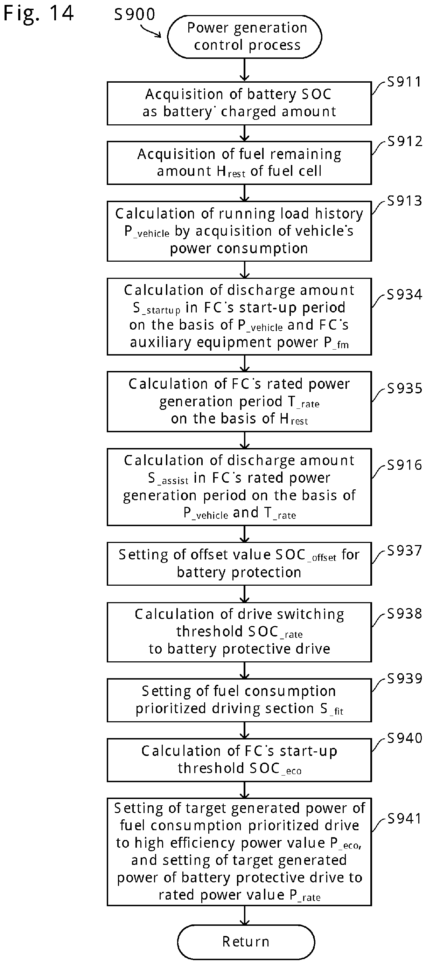

Fig. 14 is a flow chart exemplifying content of the power generation control process of the fuel cell in this embodiment.
[Fig. 15]

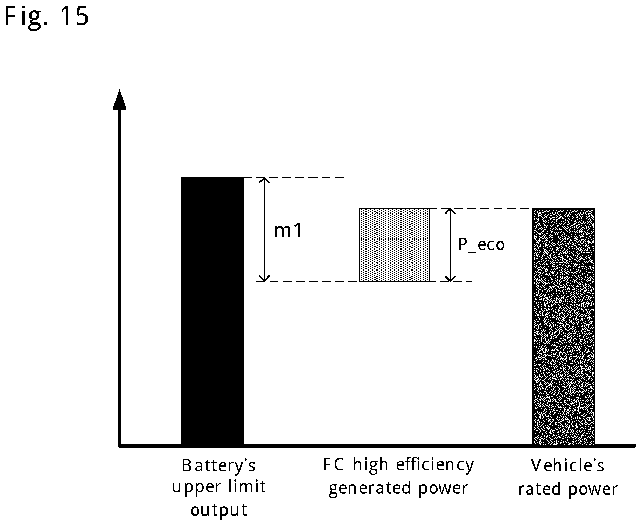

Fig. 15 is an explanatory figure showing one example of the calculation method with which the battery margin to set the offset value is calculated.
[Fig. 16]

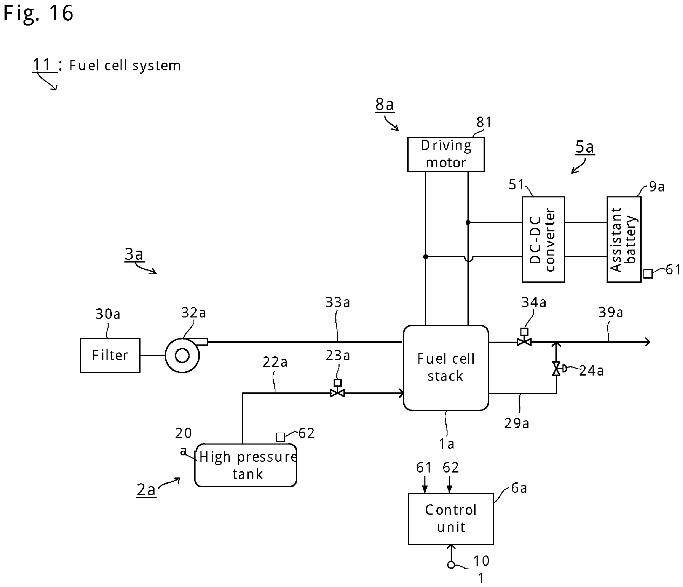

Fig. 16 is a block diagram showing main components of the fuel cell system in the fourth embodiment of the present invention.

DESCRIPTION OF EMBODIMENTS

Hereunder, embodiments of the present invention will be explained with referring to the figures.

(First Embodiment)

Fig. 1 is a block diagram showing main components of the fuel cell system 10 in the first embodiment of the present invention.
The fuel cell system 10 is a battery auxiliary system to cause a fuel cell stack 1 to generate a power in accordance with the charge condition of a battery 9. The fuel cell system 10 of this embodiment is the fuel cell system with which the generated power is supplied to load equipment 8 or the battery 9 mounted on a vehicle.
The load equipment 8 is an electric load connected to the battery 9 and to the fuel cell system 10. The load equipment 8 includes a driving motor 81 whose electric load changes. The load equipment 8 of this embodiment includes, besides the driving motor 81, a room air conditioner, vehicle auxiliary equipment, etc., which are not shown in the figure.
The driving motor 81 is a power source to drive the vehicle. The driving motor 81 generates a regenerative power upon applying a break to the vehicle, wherein this regenerative power can be charged in the battery 9.
The battery 9 is a power supply source to the driving motor 81, and this is realized, for example, by a lithium ion battery, a lead storage battery, or the like. The battery 9 charges the regenerative power of the driving motor 81 and the power outputted from the fuel cell system 10. In this embodiment, the rated output power of the battery 9 is larger than the rated output power of the fuel cell stack 1. Namely, the battery 9 is a main power supply source to the load equipment 8, and the fuel cell stack 1 is an auxiliary power supply source to the load equipment 8.

The battery 9 is provided with a charged amount sensor 61 to detect the charged amount (remaining amount) showing the power stored in the battery 9. The charged amount sensor 61 of this embodiment detects the state of charge (SOC) of the battery 9 as the charged amount of the battery 9, and outputs this detected value to a control unit 6. As the charged amount of the battery 9 increases, the SOC of the battery 9 increases. Hereinafter, the SOC of the battery 9 is called as "battery SOC".

The fuel cell system 10 comprises fuel supply equipment 2 which supplies an anode gas (fuel gas) to the fuel cell stack 1 and oxidant supply equipment 3 which supplies a cathode gas (oxidant gas) to the fuel cell stack 1. In addition, the fuel cell system 10 is provided with gas discharge equipment 4 which discharges an anode-off gas (fuel off-gas) and a cathode off-gas (oxidant off-gas), these gases being discharged from the fuel cell stack 1 to outside. The gas discharge equipment 4 comprises an anode gas discharge path 29 and a cathode gas discharge path 39, as well as a discharged gas burner 40 and an exhaust gas discharge path 41. Further, the fuel cell system 10 comprises: power converting equipment 5, which takes out the power from the fuel cell stack 1 and supplies it to at least any one of the load equipment 8 and the battery 9; and the control unit 6 which controls the whole of the fuel cell system.

The fuel cell stack 1 is a solid oxide fuel cell (SOFC). The fuel cell stack 1 is a stack of a plurality of the cells, each of which has a composition that an electrolyte layer formed of a solid oxide such as a ceramic is sandwiched between an anode electrode (fuel electrode) and a cathode electrode (air electrode).

To the anode electrode of the fuel cell stack 1 is supplied the anode gas that is reformed by the fuel supply equipment 2, and to the cathode electrode of the fuel cell stack 1 is supplied an air including oxygen, as the cathode gas, by the oxidant supply equipment 3. In the fuel cell stack 1, hydrogen included in the anode gas is caused to react with oxygen included in the cathode gas thereby generating a power, and at the same time, the anode off-gas and the cathode off-gas that are formed after the reaction are discharged to an outside air.

To a manifold formed in the anode side of the fuel cell stack 1 are connected an anode gas supply path 22 and an anode gas discharge path 29 both of which constitute the path through which the anode gas flows; and to a manifold formed in the cathode side thereof are connected a cathode gas supply path 33 and a cathode gas discharge path 39 both of which constitute the path through which the cathode gas flows.

The anode gas supply path 22 is a route along which the anode gas is supplied to the fuel cell stack 1, and the anode gas discharge path 29 is a route along which the anode off-gas from the fuel cell stack 1 is introduced into the discharged gas burner 40. Also, the cathode gas supply path 33 is a route along which the cathode gas is supplied to the fuel cell stack 1, and the cathode gas discharge path 39 is a route along which the cathode off-gas from the fuel cell stack 1 is introduced into the discharged gas burner 40.

The fuel supply equipment 2 comprises a fuel tank 20, a pump 21, the anode gas supply path 22, a fuel supply valve 23, an evaporator 24, a heat exchanger 25, and a reformer 26.

The fuel tank 20 stores a liquid including a fuel. In the fuel tank 20, a fuel to be reformed, for example, a liquid formed of mixture of ethanol and water is stored. The fuel tank 20 is provided with a fuel amount sensor 62. The fuel amount sensor 62 detects a remaining amount of the fuel to be reformed that is stored in the fuel tank 20. The detected value of the fuel amount sensor 62 is outputted to the control unit 6.

The pump 21 sucks the fuel to be reformed so as to supply it to the fuel supply equipment 2 with a certain pressure.

The anode gas supply path 22 is the path which connects between the pump 21 and the fuel cell stack 1. The anode gas supply path 22 comprises the fuel supply valve 23, the evaporator 24, the heat exchanger 25, and the reformer 26.

The fuel supply valve 23 supplies to an injection nozzle the fuel to be reformed that is supplied from the pump 21 thereby injecting the fuel to be reformed into the evaporator 24 from the injection nozzle.

The evaporator 24 gasifies the fuel to be reformed by utilizing a heat of the exhaust gas that is discharged from the discharged gas burner 40.

In order to reform the fuel to be reformed in the reformer 26, by the heat that is supplied from the discharged gas burner 40, the heat exchanger 25 further heats up the fuel to be reformed that is gasified.

The reformer 26 reforms the fuel to be reformed to the anode gas including hydrogen by a catalytic reaction thereby supplying the anode gas to the anode electrode of the fuel cell stack 1. In the reformer 26, a steam reformation, in which the fuel is reformed by using a steam, is carried out, wherein in the case that the steam necessary for the steam reformation is insufficient, partial oxidation reformation, in which reformation is done by burning the fuel with an air instead of a steam, is carried out.

The oxidant supply equipment 3 comprises a filter 30, an air aspiration path 31, a compressor 32, the cathode gas supply path 33, and a cathode gas flow rate control valve 34, as well as heating equipment comprising a heat exchanger 351, a diffusion burner 352, and a catalytic combustion burner 353.

The filter 30 removes foreign matters included in the outside air so as to introduce this air to inside the fuel cell system 10.

The air aspiration path 31 is the path through which the air having the foreign matters removed by the filter 30 is supplied to the compressor 32. On end of the air aspiration path 31 is connected to the filter 30, and the other end is connected to a suction port of the compressor 32.

The compressor 32 is an actuator so as to supply the cathode gas to the fuel cell stack 1. The compressor 32 of this embodiment takes in the outside air through the filter 30, and then supplies this air to the fuel cell stack 1, etc.

To the cathode gas supply path 33 is attached a relief valve 36. When the pressure inside the cathode gas supply path 33 goes beyond a certain value, it opens the cathode gas supply path 33 so as not to apply a load more than a certain value to the compressor 32.

The cathode flow rate control valve 34 is a control valve to control a flow rate of the cathode gas that is supplied to the fuel cell stack 1. For example, the cathode flow rate control valve 34 is composed of an electromagnetic valve. The opening degree of the cathode flow rate control valve 34 can be changed in stages, and it is controlled by the control unit 6.

The heat exchanger 351 heats up the air for the combustion gas or the air for the cathode gas by utilizing a heat of the exhaust gas discharged from the discharged gas burner 40.

At the start-up of the fuel cell system 10, the air heated by the heat exchanger 351 and the fuel for heating-up, which is supplied from a branch path 222 and is heated up by an electric heater 242, are supplied into the diffusion burner 352 so as to be mixed. And, with an ignition device attached to the diffusion burner 352, the mixture of the air and the fuel for heating-up is burnt to constitute a pre-heat burner for the catalytic combustion burner 353. After completion of the start-up, the air supplied from the heat exchanger 351 is supplied to the catalytic combustion burner 353.

At the start-up of the fuel cell system 10, the catalytic combustion burner 353 generates a high temperature combustion gas by using a catalyst and a pre-heat burner. In the catalytic combustion burner 353, the air for the combustion gas supplied via a branch path 331 and the fuel for heating-up supplied from a branch path 223 are mixed under the state that these gases are contacted with a combustion catalyst. And, by igniting the mixture of the air and the fuel for heating-up with the pre-heat burner, a large quantity of the combustion gas is generated. This combustion gas is mainly composed of an inert gas not including oxygen. The combustion gas is supplied to the cathode electrode of the fuel cell stack 1, and heats up the fuel cell stack 1. Meanwhile, after completion of the start-up, generation of the combustion gas is terminated, whereby the air passed through the heat exchanger 351 and the diffusion burner 352 is supplied to the fuel cell stack 1 as the cathode gas.

The gas discharge equipment 4 comprises the anode gas discharge path 29, the cathode gas discharge path 39, the discharged gas burner 40, and the exhaust gas discharge path 41.

To the anode gas discharge path 29 is attached a shut-off valve 28. The shut-off valve 28 is shut when the fuel cell system 10 is stopped. With this, the cathode off-gas, etc. can be prevented from reversely flowing to the anode electrode of the fuel cell stack 1 through the anode gas discharge path 29, so that deterioration of the anode can be avoided.

The discharged gas burner 40 mixes the anode off-gas with the cathode off-gas, and burns this mixed gas by a catalytic combustion, wherein an exhaust gas (post-combustion gas) mainly comprising carbon dioxide and water is generated; and at the same time, it transmits the heat generated by the catalytic combustion to the heat exchanger 25. The discharged gas burner 40 discharges the exhaust gas to the exhaust gas discharge path 41.

The exhaust gas discharge path 41 is the path through which the exhaust gas from the discharged gas burner 40 is discharged to the outside air. The exhaust gas discharge path 41 is connected to a muffler (not shown in the figure) after passing through the evaporator 24. With this, the evaporator 24 is heated up by the exhaust gas from the discharged gas burner 40.

The power converting equipment 5 includes a DC-DC converter 51 which outputs the generated power of the fuel cell stack 1 from the fuel cell system 10 to at least any one of the load equipment 8 and the battery 9.

The DC-DC converter 51 is the power converting equipment which takes out the generated power of the fuel cell stack 1. The DC-DC converter 51 raises the output voltage of the fuel cell stack 1 and supplies the generated power to at least any one of the driving motor 81 and the battery 9. To the primary side terminal of the DC-DC converter 51 is connected the fuel cell stack 1; and to the secondary side terminal thereof is connected the driving motor 81 and the battery 9.

In addition, in order to heat up the fuel cell stack 1, the fuel cell system 10 comprises: a branch path 221, the branch path 222, and the branch path 223, which are branched out from the anode gas supply path 22 to the discharged gas burner 40, the diffusion burner 352, and the catalytic combustion burner 353, respectively, so as to supply the fuel for heating-up to these respective equipment; and the branch path 331 which is branched out from the cathode gas supply path 33 so as to supply the air to the catalytic combustion burner 353.

Each of the branch paths 221, 222, and 223 is provided with a control valve 231, a control valve 232, and a control valve 233, respectively; and the branch path 331 is provided with a control valve 341.

The control valve 341 supplies a certain amount of the air to the catalytic combustion burner 353 during start-up of the fuel cell stack 1, and shuts off the branch path 331 upon completion of the start-up.

At the start-up of the fuel cell system 10, the control valves 231, 232, and 233 open the respective branch paths 221, 222, and 223 so as to flow the fuel for heating-up, and shut off respective branch paths 221, 222, and 223 upon completion of the start-up thereof. On the other hand, the fuel supply valve 23 shuts off the anode gas supply path 22 during the start-up of the fuel cell system 10, but opens the anode gas supply path 22 so as to flow the fuel to be reformed upon completion of the start-up.

During the start-up of the fuel cell system 10, to the discharged gas burner 40 is supplied from the branch path 221 the fuel for heating-up that is heated up by an electric heater 241, and thereby this is mixed with the air having passed through the fuel cell stack 1, so that the discharged gas burner 40 generates a heat by a catalytic reaction. With this, the fuel to be reformed that is heated up by the heat exchanger 25 is supplied to the reformer 26, thereby temperature of the anode gas reformed in the reformer 26 is raised; and thus, the fuel cell stack 1 is warmed up.

The control unit 6 comprises a widely used electronic circuit including a microcomputer, a microprocessor, and a CPU, as well as peripheral equipment, wherein by executing a specific program thereof, the process to control the fuel cell system 10 is carried out.

The control unit 6 receives output signals from various sensors such as the charged amount sensor 61 and the fuel amount sensor 62; and responding to these signals received, it controls operation conditions of the fuel supply equipment 2, the oxidant supply equipment 3, the gas discharge equipment 4, and the power converting equipment 5.

To the control unit 6 is connected an operation unit 101 with which a start-up direction signal or a stop direction signal to the fuel cell system 10 is outputted to the control unit 6. The operation unit 101 includes an EV (electric vehicle) key not shown in the figure, wherein when a driver operates to turn ON the EV's key, it outputs the start-up direction signal to the control unit 6, and when the operation to turn OFF the EV's key is done, it outputs the stop direction signal to the control unit 6.

When the control unit 6 receives the start-up direction signal from the operation unit 101, it carries out the start-up control to start up the fuel cell system 10, and upon completion of the start-up control, it carries out the power generation operation to cause the fuel cell stack 1 generate a power in accordance with the state of the charge in the battery 9.

For example, when the charged amount of the battery 9 becomes equal to or less than a prescribed threshold, the control unit 6 causes the fuel cell stack 1 generate a power by supplying the anode gas and the cathode gas to the fuel cell stack 1, and causes to supply the power thus generated to the load equipment 8 or the battery 9. On the other hand, when the charged amount of the battery 9 becomes more than the prescribed threshold, the control unit 6 causes the fuel cell stack 1 pause the power generation.

When the control unit 6 receives the stop direction signal from the operation unit 101, it carries out the stop control to stop the action of the fuel cell system 10.

Fig. 2 is a flow chart showing an example of the process procedure of the start-up control of the fuel cell system 10 in this embodiment.

When the fuel cell system 10 starts the start-up control, in Step S900 the control unit 6 carries out the power generation control process wherein the switch-over timing of the working condition of the fuel cell stack 1 is determined. The switch-over timing of the fuel cell stack 1 includes the power generation timing to awake the fuel cell stack 1 from the state of being stopped so as to start up the power generation, the power increase timing to increase the power generation by the fuel cell stack 1, the stop timing to stop the power generation by the fuel cell stack 1, and the like.

In this embodiment, the control unit 6 sets the FC's start-up threshold which determines the start-up timing of the fuel cell stack 1 as well as the FC's stop threshold which determines the stop timing to stop the power generation of the fuel cell stack 1. Meanwhile, with regard to the power generation control process in Step 900 will be explained later with referring to Fig. 3.

In Step S100 the control unit 6 judges whether or not the charged amount of the battery 9 becomes equal to or less than the FC's start-up threshold. Then, if the charged amount of the battery 9 is more than the FC's start-up threshold, the control unit 6 waits start-up of the fuel cell stack 1 until the charged amount of the battery 9 reaches the FC's start-up threshold. On the other hand, when the charged amount of the battery 9 is decreased to the FC's start-up threshold, the process proceeds to Step S101.

In Step S101, when the charged amount of the battery 9 is decreased to the FC's start-up threshold, the control unit 6 starts up the compressor 32, and opens the cathode flow rate control valve 34, the control valve 341, and a control valve 342 with respective certain opening degrees. With this, the air (gas for burning) is supplied to the diffusion burner 352 and to the catalytic combustion burner 353.

In Step S102 the control unit 6 starts up the pump 21 and the diffusion burner 352 (ignition device), and also opens the control valves 231 to 233. With this, the fuel for heating-up is supplied to the diffusion burner 352, the catalytic combustion burner 353, and the discharged gas burner 40, respectively. Then, in the diffusion burner 352 the pre-heat burner is formed, and by using this pre-heat burner the combustion gas is formed in the catalytic combustion burner 353; and this combustion gas passes through the fuel cell stack 1 so that the fuel cell stack 1 is heated up. Further, the combustion gas having passed through the fuel cell stack 1 reaches the discharged gas burner 40, whereby the discharged gas burner 40 is heated up by the catalytic combustion with the fuel for heating-up, and the heat exchanger 25 is heated up as well. In addition, the evaporator 24 and the heat exchanger 351 are heated up by the exhaust gas discharged from the discharge gas burner 40.

In Step S103 the control unit 6 judges whether or not the temperature of the fuel cell stack 1 reached the action temperature necessary for power generation of the fuel cell stack 1. Meanwhile, with regard to the judgement method of the temperature of the fuel cell stack 1, for example, if the temperature of the combustion gas detected by the temperature sensor goes beyond a certain value, then, with this, it may be judged that the fuel cell stack 1 reached the action temperature.

Meanwhile, with regard to the evaporator 24, the heat exchanger 25, and the reformer 26, in principle, it is necessary to judge whether or not the temperature of each equipment reached a suitable temperature to reform the fuel to be reformed sufficiently well. However, if the times for the equipment mentioned above to reach the suitable respective temperatures are quicker than the time for the fuel cell stack 1 to reach the action temperature thereof, the judgments mentioned above are not necessary.

In Step S104, if the judgement is made that the temperature of the fuel cell stack 1 reached the action temperature thereof, the control unit 6 causes to stop the diffusion burner 352 and shuts off all the control valves 231, 232, 233, and 341, and opens the fuel supply valve 23.

With this, the fuel to be reformed that is stored in the fuel tank 20 becomes the anode gas while passing through the evaporator 24, the heat exchanger 25, and the reformer 26, thereby this anode gas is supplied to the anode electrode of the fuel cell stack 1. On the other hand, the air is continuously supplied from the cathode flow rate control valve 34, which is heated up in the heat exchanger 351, and then, supplied to the fuel cell stack 1 as the cathode gas. In the fuel cell stack 1, an electrochemical reaction between the anode gas and the cathode gas starts thereby starting the power generation as well; and with this, a series of the process procedure with regard to the stat-up control of this embodiment is over.

Meanwhile, in this embodiment the explanation was made with regard to the example that the processes of Step S900 and Step S100 are carried out before execution of the start-up control by Steps S101 to S103; however, the processes of Step S900 and Step S100 may be carried out after execution of the start-up control by Steps S101 to S103, or these processes may be carried out in parallel.

Next, action of the fuel cell system 10 in the power generation operation of the fuel cell stack 1 will be briefly explained.

In the power generation operation of the fuel cell system 10, first, the fuel to be reformed that is supplied from the tank 20 is gasified by the evaporator 24; and then, the gasified fuel to be reformed is heated up by the heat exchanger 25. Then, the heated fuel to be reformed is reformed to the anode gas in the reformer 26; and then, this anode gas is supplied to the anode electrode of the fuel cell stack 1. On the other hand, the temperature of the air as the cathode gas is raised by the heat exchanger 351; and then, it is supplied to the cathode electrode of the fuel cell stack 1 after passing through the diffusion burner 352 and the catalytic combustion burner 353.

In the fuel cell stack 1 to which the anode gas and the cathode gas are supplied, the power is generated by the electrochemical reaction, and thereby this power is supplied to the DC-DC converter 51. At the same time, the anode off-gas and the cathode off-gas after having been used in the electrochemical reaction are introduced into the discharged gas burner 40. Then, under the mixed state of the anode off-gas and the cathode off-gas, these gases are burnt in the discharged gas burner 40 thereby becoming an exhaust gas, which thereafter heats up the evaporator 24 and the heat exchanger 351.

Fig. 3 is a flow chart showing one example of the power generation control process that is carried out in Step S900 of this embodiment.

In Step S901 the control unit 6 acquires the charged amount of the battery 9. The control unit 6 in this embodiment acquires the battery SOC from the charged amount sensor 61. Meanwhile, it may also be allowed that a voltage sensor is arranged in the battery 9 to detect its own voltage, and on the basis of the detected value of the voltage sensor, the control unit 6 calculates the battery SOC or the charged amount according to a prescribed map, calculation formula, or the like.

In Step S902 the control unit 6 acquires the remaining amount of the fuel which can be supplied to the fuel cell stack 1. The control unit 6 in this embodiment acquires the remaining amount of the fuel to be reformed from the fuel amount sensor 62 as the remaining amount of the fuel of the fuel cell stack 1. Meanwhile, alternatively, the control unit 6 may calculate the remaining amount of the fuel by carrying out the time integration of the power amount generated by the fuel cell stack 1, or of the injection amount of the fuel by the fuel supply valve 23, or the like.

In Step S903 when the remaining amount of the fuel becomes small, the control unit 6 sets the FC's start-up threshold with regard to the battery SOC to a smaller value as compared with when the remaining amount of the fuel is large. For example, when the request power requested by the driving motor 81 is increased rapidly, the FC's start-up threshold is set such that, taking the start-up time, etc. of the fuel cell system 10 into consideration, the charged amount of the battery 9 may not be deficient owing to the insufficient power generation due to delay in the response of the fuel cell stack 1.

With this, in the situation that discharge of the battery 9 to the driving motor 81 and the charge to the battery 9 by the regenerative power of the driving motor 81 and the generated power of the fuel cell stack 1 are repeated, the number that the battery SOC crosses over the FC's start-up threshold can be reduced. Accordingly, during operation of the fuel cell system 10, consumption of the fuel for heating-up due to start-up of the fuel cell stack 1 can be reduced.

Because consumption of the fuel for heating-up not contributing to power generation of the fuel cell stack 1 is suppressed as mentioned above, when possibility of shortage of the output (charged amount) of the battery 9 is increased, the fuel cell stack 1 is caused to start up so that the generated power thereof can be accurately charged to the battery 9. Accordingly, deterioration of the fuel consumption of the fuel cell system 10 can be suppressed while ensuring the output of the battery 9.

For example, in Step S903 the control unit 6 may change the FC's start-up threshold so as to be lower as the remaining amount of the fuel decreases. With this, the FC's start-up threshold becomes higher as the remaining amount of the fuel increases; and thus, the situation can be avoided that the charged amount of the battery 9 becomes deficient under the state that the much fuel is remained thereby resulting in the situation that the request power of the driving motor 81 cannot be obtained. On the other hand, because the FC's start-up threshold becomes lower as the remaining amount of the fuel decreases, consumption of the fuel not contributing to power generation of the fuel cell stack 1 can be suppressed.

As mentioned above, when the change is made such that the FC's start-up threshold lowers as the remaining amount of the fuel decreases, with facilitating consumption of the fuel in the fuel cell stack 1 in preference to consumption of the charged amount of the battery 9, deterioration of the fuel consumption of the fuel cell system 10 can be suppressed.

Further, when the remaining amount of the fuel is smaller as compared with consumption of the fuel for heating-up necessary to start up the fuel cell stack 1, the FC's start-up threshold may be set, for example, to zero so as to prohibit the fuel cell stack 1 from starting up. With this, useless start-up of the fuel cell stack 1 not contributing to charging of the battery 9 can be suppressed.

Thereafter, in order to avoid a shortage of the charged amount of the battery 9, the control unit 6 sets the target generated power, which is the target value of the generated power of the fuel cell stack 1, to a prescribed power value. This prescribed power value may be previously obtained by an experiment or the like, or may be changed to a larger value in response to rapid increase in the request power of the driving motor 81.

When the process of Step S903 is over, the process returns to the process procedure shown in Fig. 2, thereby proceeding to the process of Step S100; and when the battery SOC becomes equal to or less than the FC's start-up threshold, the start-up control of the fuel cell system 10 is carried out.

As mentioned above, according to the first embodiment of the present invention, the method for controlling the fuel cell system 10 includes the charged amount acquiring Step S901 in which the charged amount of the battery 9 is acquired, and the power generation control Steps S100 to S103 in which when the charged amount of the battery 9 becomes equal to or less than the FC's start-up threshold (prescribed value), the fuel cell stack 1 is caused to be started up from the state of being stopped. The fuel cell system 10 like this supplies the fuel-containing anode gas and the oxidant-containing cathode gas to the fuel cell stack 1 so as to cause the fuel cell stack 1 to generate the power, and outputs this generated power to the battery 9.

And, this control method includes: the fuel amount acquiring Step S902 in which the remaining amount of the fuel that can be supplied to the fuel cell stack 1 is acquired; and the setting Step S903 in which when the remaining amount of the fuel becomes small, the FC's start-up threshold is set to a lower value as compared with when the remaining amount of the fuel is large.

Therefore, by making the FC's start-up threshold higher when the remaining amount of the fuel is large, consumption of the fuel is facilitated in preference to consumption of the charged amount of the battery 9; and thus, the situation that the charged amount of the battery 9 becomes deficient under the state that a large quantity of the fuel is remained can be suppressed.

Further, because the FC's start-up threshold is made lower when the remaining amount of the fuel becomes less, number of the start-up of the fuel cell stack 1 due to repeat of the charge and discharge of the battery 9 can be reduced; and thus, consumption of the fuel for heating-up not contributing to power generation of the fuel cell stack 1 can be reduced. In addition, only when the possibility of deficiency of the charged amount of the battery 9 becomes high, the fuel cell stack 1 is caused to be started up so as to charge the generated power of the fuel cell stack 1 to the battery 9; and thus, deficiency of the charged amount of the battery 9 can be suppressed.

Therefore, according to this embodiment, with ensuring the output of the battery 9, deterioration in the consumption of the fuel cell system 10 can be suppressed.

Meanwhile, in order to ensure the output of the battery 9, it may be presumed to increase the rated power of the fuel cell stack 1 itself. In this case, however, not only the manufacturing cost of the fuel cell stack 1 increases but also the layout thereof becomes difficult. Therefore, as in the case of this embodiment, by lowering the FC's start-up threshold as the remaining amount of the fuel decreases lower, not only the deterioration in the fuel consumption of the fuel cell system can be suppressed with ensuring the output of the battery 9, but also the manufacturing cost of the fuel cell stack 1 as well as the layout can be suppressed from being increased.

(Second Embodiment)

Fig. 4 is a flow chart showing one example of the power generation control process in the second embodiment of the present invention. Because compositions of the fuel cell system of this embodiment are the same as those of Fig. 1, hereunder, explanation will be made by giving the same symbol to the same component.

In Step S911 the control unit 6 acquires the battery SOC from the charged amount sensor 61.

In Step S912 the control unit 6 acquires the remaining amount of the fuel from the fuel amount sensor 62; and on the basis of the remaining amount of the fuel thus acquired, the remaining hydrogen amount $H_{rest}$ is estimated in accordance with a prescribed calculation formula. Namely, the control unit 6 acquires the remaining hydrogen amount $H_{rest}$ as the remaining amount of the fuel that can be supplied to the fuel cell stack 1.

In Step S913 the control unit 6 acquires a vehicle's power consumption, which shows the consumed power value of the load equipment 8. The control unit 6 records the acquired vehicle's power consumption values in the history information, which chronically shows the vehicle's power consumption values obtained in the past, and calculates the running load history $P_{vehicle}$ by using this history information. Because the vehicle's power consumption includes the request power (or actual consumed power) of the driving motor 81, the vehicle's power consumption increases as the press amount of the accelerator pedal becomes larger.

The control unit 6 of this embodiment calculates as the running load history $P_{vehicle}$ the moving average value of plural vehicle's power consumptions obtained during a prescribed period. Meanwhile, the running load history $P_{vehicle}$ is not limited to the moving average value, but it may be a representative value relating to plural vehicle's power consumptions obtained during a prescribed period, such as a central value, a most frequent value, or a maximum value; or it may be a representative value corrected in accordance with the degree of dispersion.

In Step S914 the control unit 6 calculates the battery's discharge amount Startup during the FC's start-up period, wherein this discharge amount shows the power amount discharged from the battery 9 during the start-up period $T_{startup}$ of the fuel cell stack 1. The battery's discharge amount $S_{atartup}$ during the FC's start-up period used herein shows the ratio of the discharged power amount during the FC's start-up period to the rated capacity of the battery 9, and it is expressed by percentage.

The battery's discharge amount Startup during the FC's start-up period can be calculated as follows. Namely, first, the discharged power of the battery 9 is obtained by adding the consumed power of the FC's auxiliary equipment, which is the auxiliary equipment of the fuel cell stack 1, to the vehicle's power consumption, and then, this discharged power is multiplied with the FC's start-up period $T_{starcup}$.

In this embodiment, the control unit 6 calculates the battery's discharge amount $S_{startup}$ during the FC's start-up period on the basis of the running load history $P_{vehicle}$ and the FC's auxiliary equipment power $P_{fm}$, as shown in the following formula (1). The FC's auxiliary equipment power $P_{fm}$ is the power consumed by the auxiliary equipment of the fuel cell stack 1, wherein the FC's auxiliary equipment includes the pump 21, the compressor 32, the control valves 231 to 233, 341, and 342, etc.

[Math. 1]

$$W\,[kWh] = X_{\_batt} \times \frac{S_{\_startup}}{100} = \left(P_{\_fm} + P_{\_vehicle}\right) \times \frac{T_{\_startup}}{3600} \times \frac{E_{\_batt}}{100}$$

As shown in the above formula, the power amount W [kWh] discharged from the battery 9 during the FC's start-up period $T_{startup}$ can be expressed by multiplying the rated capacity $X_{batt}$ of the battery 9 with the battery's discharge amount $S_{tartup}$ during the FC's start-up period. And, the power amount W [kWh] discharged from the battery 9 during the FC's start-up period $T_{startup}$ can be obtained by taking into consideration the charge and discharge efficiency $E_{batt}$ of the battery 9 in the consumed power amount obtained by multiplying the total consumed power ($P_{vehicle}+P_{fm}$) of the loads connected to the battery 9 with the FC's start-up period $T_{startup}$.

Meanwhile, the rated capacity $X_{batt}$ of the battery 9 is an upper limit value of the power amount chargeable to the battery 9. The total consumed power ($P_{vehicle}+P_{fm}$) of the loads connected to the battery 9 is the sum of the running load history $P_{vehicle}$ and the FC's auxiliary equipment power $P_{fm}$. The charge and discharge efficiency $E_{batt}$ of the battery 9 is expressed by percentage, wherein the power loss due to an internal resistance of the battery 9 is taken into consideration. Value of the FC's start-up period $T_{startup}$ can be obtained by an experiment or the like, wherein the unit thereof is second.

Then, by expanding the above formula, the battery's discharge amount $S_{startup}$ during the FC's start-up period can be derived, as expressed by the formula (1).

[Math. 2]

$$S_{\_startup} = \left(P_{\_fm} + P_{\_vehicle}\right) \times \frac{T_{\_startup}}{3600} \times \frac{E_{\_batt}}{X_{\_batt}} \quad \cdots (1)$$

Upon calculating the FC's start-up threshold $SOC_{\_rate}$, by taking into consideration the battery's discharge amount $S_{\_startup}$ during the FC's start-up period as mentioned above, the situation that the charged amount of the battery 9 is deficient during start-up of the fuel cell stack 1 can be suppressed from happening.

In Step S915 the control unit 6 calculates the FC's rated power generation period $T_{\_rate}$, which is the power generation period by the rated power generation of the fuel cell stack 1, on the basis of the fuel's remaining amount $H_{rest}$ of the fuel cell stack 1, as shown in the following formula (2).

[Math. 3]

$$W\,[kWh] = \frac{T_{\_rate}}{3600} \times P_{\_rate} = \left(H_{rest} - H_{\_startup}\right) \times 120000 \times \frac{E_{\_rate}}{100}$$

As shown in the above formula, the power amount W [kWh] which can be generated by the fuel cell stack 1 with the rated power $P_{\_rate}$ during FC's rated power generation period $T_{\_rate}$ can be obtained by taking into consideration the power generation efficiency $E_{\_rate}$ of the fuel cell stack 1 in the power generation amount which is obtained by multiplying the fuel's remaining amount after start-up ($H_{rest}$-$H_{startup}$) with the amount of heat generation of the fuel (120000).

Meanwhile, the fuel's remaining amount after start-up ($H_{rest}$-$H_{startup}$) can be obtained by subtracting the consumption $H_{startup}$ of the fuel for heating-up that is necessary to start up the fuel cell stack 1 from the fuel's remaining amount $H_{rest}$. The consumption $H_{startup}$ of the fuel for heating-up is the value which can be obtained by an experiment or the like. The power generation efficiency $E_{\_rate}$ of the fuel cell stack 1 is the power generation efficiency when the fuel cell stack 1 generates the power with the rated power $P_{\_rate}$. The unit of the FC's rated power generation period $T_{\_rate}$ is second.

Then, by expanding the above formula, the FC's rated power generation period $T_{\_rate}$ can be derived, as shown in the formula (2).

[Math. 4]

$$\frac{T_{\_rate}}{3600} = \frac{\left(H_{rest} - H_{startup}\right) \times 120000}{P_{\_rate}} \times \frac{E_{\_rate}}{100} \quad \cdots (2)$$

Upon calculating the FC's rated power generation period $T_{\_rate}$, by taking into consideration the consumption $H_{startup}$ of the fuel for heating-up that is necessary to start up the fuel cell stack 1, start-up of the fuel cell stack 1 not contributing to charging of the battery 9 can be suppressed; and in addition, the situation that the charged amount of the battery 9 is deficient under the state that fuel of the fuel cell stack 1 remains can be suppressed from happening. Meanwhile, in view of the relationship in the formula (2), the FC's rated power generation period $T_{\_rate}$ becomes shorter as the fuel's remaining amount $H_{rest}$ becomes less.

In Step S916 the control unit 6 calculates the battery's discharge amount $S_{\_assist}$ during the FC's rated power generation period $T_{\_rate}$ on the basis of the vehicle's running load history $P_{\_vehicle}$, as shown by the following formula (3).

[Math. 5]

$$W\,[kWh] = X_{\_batt} \times \frac{S_{\_assist}}{100} = \max\left(0, P_{\_vehicle} - P_{\_rate}\right) \times \frac{T_{\_rate}}{3600} \times \frac{E_{\_batt}}{100}$$

As shown in the above formula, the power amount W [kWh] that is discharged from the battery 9 during the FC's rated power generation period $T_{\_rate}$ can be obtained by multiplying the discharged power ($P_{\_vehicle} - P_{\_rate}$) of the battery 9 with the FC's rated power generation period $T_{\_rate}$. The discharged power ($P_{\_vehicle} - P_{\_rate}$) of the battery 9 in the FC's rated power generation period $T_{\_rate}$ can be obtained by subtracting the rated power $P_{\_rate}$ of the fuel cell stack 1 which assists the battery 9 from the running load history $P_{\_vehicle}$.

Then, by expanding the above formula, the battery's discharge amount $S_{\_assist}$ during the FC's rated power generation period can be derived as shown in the formula (3).

[Math. 6]

$$S_{\_assist} = \max\left(0, P_{\_vehicle} - P_{\_rate}\right) \times \frac{T_{\_rate}}{3600} \times \frac{E_{\_batt}}{X_{\_batt}} \quad \cdots (3)$$

By calculating the battery's discharge amount $S_{\_assist}$ during the FC's rated power generation period, the situation that the charged amount of the battery 9 is deficient during power generation of the fuel cell stack 1 can be suppressed from happening. Meanwhile, as shown in the formula (2), the FC's rated power generation period $T_{\_rate}$ becomes shorter as the fuel's remaining amount $H_{rest}$ decreases, so that the battery's discharge amount $S_{\_assist}$ during the FC's rated power generation period decreases as the fuel's remaining amount $H_{rest}$ decreases.

In Step S917, in order to suppress the deficiency of the charged amount of the battery 9 under the state that the fuel of the fuel cell stack 1 remains, the control unit 6 sets the offset value $SOC_{offset}$. The offset value $SOC_{offset}$ shows the battery SOC value with which the output of the battery 9 must be ensured when all the remaining amount of the fuel is consumed. Meanwhile, with regard to how to set the offset value $SOC_{offset}$ will be explained later with referring to Fig. 9 and Fig. 10.

In Step S918 the control unit 6 calculates the FC's start-up threshold that determines the start-up timing of the fuel cell stack 1. This FC threshold is set such that the charged amount of the battery 9 may not be deficient before all the fuel in the tank 20 is consumed.

The control unit 6 of this embodiment calculates the FC's start-up threshold $SOC_{\_rate}$ by using the offset value $SOC_{\_offset}$, the battery's discharge amount $S_{\_assist}$ during the FC's rated power generation period, and the battery's discharge amount $S_{\_tartup}$ during the FC's start-up period, as shown in the next formula (4).

[Math. 7]

$$SOC_{\_rate} = \min\left(SOC_{\_reg}, SOC_{\_offset} + S_{\_assist} + S_{\_startup}\right) \quad \cdots (4)$$

Upon calculating the FC's start-up threshold $SOC_{\_rate}$, by taking into consideration the battery's discharge amount Startup during the FC's start-up period, the FC's start-up threshold $SOC_{\_rate}$ is significantly corrected, so that the situation that the charged amount of the battery 9 is deficient during start-up of the fuel cell stack 1 can be avoided from happening.

In addition, as shown in the formulas (2) and (3), because the battery's discharge amount $S_{\_assist}$ during the FC's rated power generation period decreases as the fuel's remaining amount $H_{rest}$ decreases, the FC's start-up threshold $SOC_{\_rate}$ in the formula (4) becomes lower as the fuel's remaining amount $H_{rest}$ decreases. Namely, as the fuel's remaining amount $H_{rest}$ decreases, start-up of the fuel cell stack 1 is suppressed more; and as the fuel's remaining amount $H_{rest}$ increases, start-up timing of the fuel cell stack 1 becomes quicker.

The FC's stop threshold $SOC_{\_reg}$ in the formula (4) is the battery SOC to determine the stop timing of the fuel cell stack 1. The FC's stop threshold $SOC_{\_reg}$ is the value which can be obtained by an experiment or the like, wherein this is set so as to be larger than the FC's start-up threshold $SOC_{\_rate}$. With this, the FC's stop threshold $SOC_{\_reg}$ and the FC's start-up threshold $SOC_{\_rate}$ are provided with hysteresis, so that actions of start-up and stop of the fuel cell stack 1 can be stabilized.

In Step S919, if judgement is made that the battery SOC reached the FC's start-up threshold $SOC_{\_rate}$, the control unit 6 sets the target power generation of the fuel cell stack 1 to the rated power $P_{\_rate}$, and with this, a series of the process procedure with regard to the power generation control process of this embodiment is over. After this, in order to carry out the start-up control of the fuel cell system 10, the control unit 6 returns to the process procedure shown in Fig. 2, and the process proceeds to Step S100.

With this, the control unit 6 causes to start the diffusion burner 352, the catalytic combustion burner 353, etc., so as to raise the temperature of the fuel cell stack 1 to the action temperature necessary for the rated power generation; and then, it causes to supply the anode gas and the cathode gas to the fuel cell stack 1 with respective flow rates necessary for the rated power generation.

As mentioned above, the FC's start-up threshold $SOC_{\_rate}$ is set so as to be at least more than the offset value $SOC_{\_offset}$, and also so to be higher as the fuel's remaining amount $H_{rest}$ increases. With this, start-up timing of the fuel cell stack 1 is quickened, so that with facilitating consumption of the fuel the charged amount of the battery 9 can be ensured. Accordingly, the situation that the charged amount of the battery 9 is deficient under the state that a large amount of the fuel remains can be avoided from happening.

And, the FC's start-up threshold $SOC_{\_rate}$ is set so as to be lower as the fuel's remaining amount $H_{rest}$ decreases, provided that the battery SOC at the time when all the fuel's remaining amount $H_{rest}$ is consumed is not less than the offset value $SOC_{\_offset}$. With this, number of the start-up of the fuel cell stack 1 can be reduced with ensuring the charged amount of the battery 9.

In addition, the FC's start-up threshold $SOC_{\_rate}$ is set so as to be higher as the vehicle's running load history $P_{\_vehicle}$ increases. With this, start-up of the fuel cell stack 1 is quickened, so that the situation that the charged amount of the battery 9 is deficient under the state that the fuel of the fuel cell stack 1 remains can be avoided from happening.

Fig. 5 is a figure showing the setting method to set the generated power of the fuel cell stack 1 in this embodiment.

In Fig. 5, the horizontal axis indicates the battery SOC, and the vertical axis indicates the target output power of the fuel cell system 10. The target output power of the fuel cell system 10 is the target value of the generated power of the fuel cell stack 1 that must be outputted to at least any one of the driving motor 81 and the battery 9 from the fuel cell system 10.

As mentioned in Step S917 in Fig. 4, the control unit 6 sets the offset value $SOC_{\_offset}$, and calculates the battery's discharge amount $S_{\_assist}$ during the FC's rated power generation period and the battery's discharge amount $S_{\_startup}$ during the FC's start-up period on the basis of the vehicle's running load history $P_{\_vehicle}$. In Fig. 5, a sum of $SOC_{\_offset}$, $S_{\_assist}$, and $S_{\_startup}$ is less than the FC's stop threshold $SOC_{\_reg}$, so that the control unit 6 sets this sum as the FC's start-up threshold $SOC_{\_rate}$. With this, when the battery SOC drops to the FC's start-up threshold $SOC_{\_rate}$, the control unit 6 causes the fuel cell stack 1 to start up, so that it can generate the power.

For example, if the battery SOC immediately after the ON operation of the EV's key is more than the FC's start-up threshold $SOC_{\_rate}$, the fuel cell stack 1 is kept under the state of being stopped. By driving of the vehicle, the power is outputted from the battery 9 to the driving motor 81 thereby causing the decrease in the battery SOC, whereby when the battery SOC is decreased to the FC's start-up threshold $SOC_{\_rate}$, the start-up control of the fuel cell system 10 is carried out.

In the FC's start-up section, only the FC's auxiliary equipment such as the pump 21 and the compressor 32 is started up, with the power generation of the fuel cell stack 1 being zero. Therefore, the total power consumption of the vehicle's power consumption added with the power consumption of the FC auxiliary equipment is covered only by the battery 9.

Here, the target output power of the fuel cell system 10 is set to the rated power $P_{\_rate}$ of the fuel cell stack 1. With this, the control unit 6 causes to start up the diffusion burner 352, the catalytic combustion burner 353, the discharged gas burner 40, etc., so as to raise the respective temperatures to the respective temperature ranges in which the fuel cell stack 1 can carry out the rated power generation. At the same time, the control unit 6 causes to drive the fuel supply valve 23, the compressor 32, etc., so as to supply the anode gas and the cathode gas to the fuel cell stack 1 with the respective flow rates necessary to carry out the rated power generation.

In the FC's rated power generation section, in order to assist the power supply by the battery 9 to the driving motor 81, etc., the target output power of the fuel cell system 10 is set to the rated power $P_{\_rate}$ of the fuel cell stack 1. With this, the control unit 6 controls the temperature of the fuel cell stack 1, the supply amount of the anode gas, and the supply amount of the cathode gas, such that the fuel cell stack 1 can generate the power with the rated power $P_{\_rate}$.

For example, in the case that the running load history $P_{\_vehicle}$ does not change but is constant, when the fuel's remaining amount $H_{rest}$ stored in the fuel tank 20 runs out, the battery SOC with the amount of the offset value $SOC_{\_offset}$ can be ensured.

Or, in the case that the running load history $P_{\_vehicle}$ decreases after start-up of the fuel cell stack 1, when the fuel's remaining amount $H_{rest}$ runs out, the battery SOC becomes larger than the offset value $SOC_{\_offset}$. When the running load history $P_{\_vehicle}$ becomes zero, all the generated power of the fuel cell stack 1 is charged in the battery 9, so that the battery SOC increases. When the battery SOC becomes more than the FC's stop threshold $SOC_{\_reg}$, the control unit 6 stops power generation of the fuel cell stack 1. With this, useless power generation of the fuel cell stack 1 can be suppressed.

On the other hand, in the case that the running load history $P_{\_vehicle}$ increases after start-up of the fuel cell stack 1, when the fuel's remaining amount $H_{rest}$ runs out, the battery SOC becomes less than the offset value $SOC_{\_offset}$. Therefore, the offset value $SOC_{\_offset}$ is previously determined such that even in the case that the running load history $P_{\_vehicle}$ increases, the battery 9 may not undergo the over-discharge when the fuel's remaining amount $H_{rest}$ runs out.

As mentioned above, when the FC's start-up threshold $SOC_{\_rate}$ which determines the start-up timing of the fuel cell stack 1 is set in accordance with the fuel's remaining amount $H_{rest}$ that can be supplied to the fuel cell stack 1, the charged amount necessary to protect the battery 9 can be ensured even when all of the fuel is consumed. Further, even in the case that the power consumption of the driving motor 81 rapidly increases at the time when the fuel's remaining amount $H_{rest}$ is small, by making the fuel cell stack 1 generate the power with the rated power $P_{\_rate}$, over-discharge of the battery 9 due to the response delay of the fuel cell stack 1 can be suppressed with ensuring the request output of the driving motor 81.

Fig. 6 shows one example of the relationship between the running load history $P_{\_vehicle}$ and the FC's start-up threshold $SOC_{\_rate}$.

As shown in Fig. 6, when the running load history $P_{\_vehicle}$ is less than the rated power $P_{\_rate}$ of the fuel cell stack 1, assistance from the fuel cell stack 1 is unnecessary, so that the FC's start-up threshold $SOC_{\_rate}$ is set to the offset value $SOC_{\_offset}$.

On the other hand, the discharge power of the battery 9 increases as the running load history $P_{\_vehicle}$ increases relative to the rated power $P_{\_rate}$ of the fuel cell stack 1, so that probability that the battery 9 undergoes over-discharge becomes high. Because of this, as the running load history $P_{\_vehicle}$ increases relative to the rated power $P_{\_rate}$ of the fuel cell stack 1, the control unit 6 raises the FC's start-up threshold $SOC_{\_rate}$ in order to quicken the assisting timing of the power supply from the battery 9 to the driving motor 81.

By so doing, as the power consumption of the motor 81 increases, the FC's start-up threshold $SOC_{\_rate}$ becomes higher, so that the start-up timing of the fuel cell stack 1 is quickened; and thus, the situation that the charged power of the battery 9 is deficient during the fuel cell stack 1 is generating the power can be avoided from happening.

Fig. 7 is a time chart illustrating the change in the output of the fuel cell system 10 with the change of the battery SOC in this embodiment.

In Fig. 7, the change of the battery SOC is shown by the solid line, and the change of the output power of the fuel cell system 10 is shown by the dotted line.

First, at the time t0, the power is supplied to the load equipment such as the driving motor 81 only from the battery 9. Therefore, the battery SOC gradually decreases.

At the time t1, the battery SOC reaches the FC's start-up threshold $SOC_{\_rate}$, so that the start-up control of the fuel cell stack 1 starts. At this time, in the fuel cell system 10, in order to drive the pump 21 and the compressor 32, the FC's auxiliary equipment power $P_{\_fm}$ is necessary. Here, because the FC's auxiliary equipment power $P_{\_fm}$ is covered with the battery 9, the lowering rate of the battery SOC is large in the FC's start-up period $T_{\_startup}$, wherein the battery SOC decreases lowered by the battery's discharge amount $S_{\_tartup}$ in the FC's start-up period.

At the time t2, because the temperature of the fuel cell stack 1 reaches the action temperature necessary for the rated power generation, power generation of the fuel cell stack 1 with the rated power $P_{\_rate}$ starts. With this, the power is supplied to the load equipment 8 not only from the battery 9 but also from the fuel cell stack 1; and thus, the discharge power of the battery 9 decreases. Because of this, the lowering rate of the battery SOC becomes slow in the FC's rated power generation period $T_{\_rate}$; and thus, the battery SOC decreases by the battery's discharge amount $S_{\_assist}$ in the FC's rated power generation period.

At the time t3, all the remaining amount of the fuel that is stored in the fuel tank 20 is consumed, so that power generation of the fuel cell stack 1 stops, wherein the battery SOC with the amount of the offset value $SOC_{\_offset}$ is ensured. Therefore, during the fuel cell stack 1 is generating the power, such a trouble as the decrease in the output of the driving motor 81 due to shortage of the power of the battery 9 or over-discharge of the battery 9 can be avoided from happening.

As mentioned above, by taking into consideration the battery's discharge amount $S_{\_startup}$ during the FC's start-up period in the FC's start-up threshold $SOC_{\_rate}$, at the time t3 when all the remaining amount of the fuel of the fuel cell stack 1 is consumed, the charged amount of the battery 9 with the amount of the offset value $SOC_{\_offset}$ can be properly ensured. In addition, when the fuel cell stack 1 carries out the power generation with the rated power $P_{\_rate}$, with facilitating the fuel consumption of the fuel cell stack 1 the decrease in the charged amount of the battery 9 can be suppressed.

Fig. 8 is a time chart when the fuel cell stack 1 carries out the power generation operation in accordance with the battery SOC after completion of start-up of the fuel cell system 10.

Here, the embodiment is presumed that after completion of start-up of the fuel cell stack 1, namely after the temperature of the fuel cell stack 1 reaches the action temperature capable of performing the rated power generation, judgement is made whether or not the acquired battery SOC is equal to or less than the FC's start-up threshold $SOC_{\_rate}$.

In this embodiment, because there is no need to use the fuel for heating-up, the battery's discharge amount $S_{\_tartup}$ during the FC's start-up period is set to zero.

In Fig. 8, the change in the battery SOC is shown by the solid line, and the change in the fuel's remaining amount $H_{rest}$ is shown by the dotted line.

At the time t0, the power is supplied to the load equipment 8 such as the driving motor 81 only from the battery 9. Therefore, the battery SOC decreases gradually.

At the time t11, the battery SOC reaches the FC's start-up threshold $SOC_{\_rate}$, so that the power generation by the fuel cell stack 1 with the rated power $P_{\_rate}$ starts. With this, the fuel's remaining amount $H_{rest}$ decreases gradually with passage of time. Meanwhile, as mentioned above, because the temperature of the fuel cell stack 1 is raised to the action temperature capable of performing the rated power generation, execution of the start-up control of the fuel cell stack 1 is omitted.

Because the fuel cell stack 1 starts the power generation, the power is supplied not only from the battery 9 but also from the fuel cell stack 1; and thus, the discharge power of the battery 9 decreases. Because of this, the lowering rate of the battery SOC becomes slower.

At the time t12, the fuel's remaining amount $H_{rest}$ becomes zero, so that the fuel cell stack 1 stops the power generation. At this time, the battery SOC with the amount of the offset value $SOC_{\_offset}$ is ensured. Because of this, during the fuel cell stack 1 is generating the power, the situation that the power supplied to the driving motor 81 decreases rapidly due to shortage of the battery SOC can be avoided.

As mentioned above, when the battery SOC is decreased to the FC's start-up threshold $SOC_{\_rate}$, power generation of the fuel cell stack 1 is significantly increased, from zero to the rated power. Namely, when the ratio of the fuel's remaining amount $H_{rest}$ to the battery SOC becomes significant, power generation of the fuel cell stack 1 is increased in stages so as to make this ratio smaller thereby decreasing the fuel's remaining amount $H_{rest}$.

With this, the situation that the charged amount of the battery 9 is deficient under the state that the fuel of the fuel cell stack 1 is remaining can be avoided. Accordingly, by efficiently utilizing the generated power of the fuel cell stack 1 with avoiding rapid decrease in the output of the driving motor 81, the charged amount of the battery 9 can be ensured.

Fig. 9 is an explanatory figure showing one example of the setting method with which the offset value $SOC_{\_offset}$ to ensure the output of the battery 9 is set.

In Fig. 9, the horizontal axis shows the battery margin, which shows the difference between the running load history $P_{\_vehicle}$ and the upper limit output which is the upper limit value of the output power of the battery 9, and the vertical axis shows the offset value $SOC_{\_offset}$.

As shown in Fig. 9, as the battery margin is higher, possibility to cause deficiency of the charged amount of the battery 9 before the remaining amount of the fuel is consumed decreases more; and thus, the offset value $SOC_{\_offset}$ is set lower.

The control unit 6 in this embodiment changes the offset value $SOC_{\_offset}$ in the range from the lower limit value $SOC_{\_offset\_L}$ to the upper limit value $SOC_{\_offset\_H}$ in accordance with the battery margin in the section from the first margin m1 to the second margin m2.

The first margin m1 is the battery margin when the running load history $P_{\_vehicle}$ is increased to the vehicle's rated power $P_{\_vehicle\_rate}$. The vehicle's rated power $P_{\_vehicle\_rate}$ is the vehicle's power consumption when power consumption of the load equipment 8 becomes maximum. Meanwhile, the calculation method of the first margin m1 will be described with referring to the next figure.

The second margin m2 is the value which can be obtained by an experiment or the like. For example, this is set to the battery margin when the running load history $P_{\_vehicle}$ becomes the value obtained by multiplying the vehicle's rated power with the coefficient "0.7".

As mentioned above, when the battery margin becomes higher, the control unit 6 lowers the FC's start-up threshold $SOC_{\_rate}$ as compared with the time when the battery margin is low. By so doing, with ensuring the charged amount of the battery 9, the chance that the fuel cell stack 1 undergoes the rated power generation can be lowered, so that the fuel consumption can be improved.

Fig. 10 is an explanatory figure showing one example of the calculation method to calculate the battery margin shown in Fig. 9.

Fig. 10(a) is an output characteristic figure showing the relationship between the battery's upper limit output and the battery SOC. Fig. 10(b) is an explanatory figure showing the calculation method of the first margin m1.

As shown in Fig. 10(b), the first margin m1 is set to the value which is obtained by subtracting the vehicle' rated power from the battery's upper limit output at the time when the battery SOC becomes the offset value $SOC_{\_offset}$. The battery margin shown in Fig. 9 is calculated by subtracting the running load history $P_{\_vehicle}$ from the battery's upper limit output at the time when the battery SOC becomes the offset value $SOC_{\_offset}$.

Meanwhile, as shown in Fig. 10(a), because the battery's upper limit output changes with the battery SOC, the lower limit value $SOC_{\_offset\_L}$ of the offset value shown in Fig. 9 is determined by taking the output characteristics, etc.

of the battery 9 into consideration.

Here, the battery margin is calculated by subtracting the running load history $P_{\_vehicle}$ from the battery's upper limit output at the time when the battery SOC becomes the offset value $SOC_{\_offset}$. However, the difference between the battery's upper limit output of the battery SOC and the vehicle's power consumption at the moment may also be used as the battery margin.

As described above, the control unit 6 calculates the battery margin by taking the output characteristics of the battery 9 into consideration, wherein the offset value $SOC_{\_offset}$ is made lower as the battery margin becomes higher. With this, useless consumption of the fuel's remaining amount $H_{rest}$ by carrying out the power generation of the fuel cell stack 1 in spite that the battery SOC is sufficiently high can be suppressed. Therefore, the fuel consumption of the fuel cell stack 1 can be improved.

Meanwhile, in this embodiment, in the case when the battery SOC decreases to the FC's start-up threshold $SOC_{\_rate}$, the target generated power of the fuel cell stack 1 is set to the rated power $P_{\_rate}$; however, this may be set to a prescribed power which is lower than the rated power $P_{\_rate}$. Even in the case like this, too, the charged amount of the battery 9 can be satisfactorily ensured after the remaining amount of the fuel is consumed.

According to the second embodiment of the present invention, in the power generation control process of the Step S900 shown in Fig. 4, as shown in the formulas (2) to (4), the control unit 6 changes the FC's start-up threshold $SOC_{\_rate}$ to a smaller value as the fuel's remaining amount $H_{rest}$ decreases.

With this, number of the start-up of the fuel cell stack 1 caused by the charge and discharge of the battery 9 can be decreased, so that the consumption $H_{\_startup}$ of the fuel for heating-up not contributing to power generation of the fuel cell stack 1 can be reduced. Accordingly, with ensuring the charged amount of the battery 9, the fuel consumption of the fuel cell system 10 can be improved.

In addition, according to this embodiment, in the power generation control process of Step S900, as shown in Fig. 8, when the battery SOC decreases, the control unit 6 sets the target generated power of the fuel cell stack 1 to from zero to a higher prescribed power value as compared with when the battery SOC is high. With this, the situation that the charged amount of the battery 9 is deficient under the state that the fuel of the fuel cell stack 1 remains can be suppressed.

The prescribed power value which is set to the target generated power is preferably set to the rated power value $P_{\_rate}$ of the fuel cell stack 1. With this, the generated power of the fuel cell stack 1 which assists the battery 9 is made maximum, so that even when the power consumption of the load equipment 8 increases rapidly, over-discharge hardly takes place in the battery 9. Therefore, with promptly decreasing the remaining amount of the fuel of the fuel cell stack 1, output of the battery 9 can be ensured furthermore.

Further, according to this embodiment, as shown in Fig. 7, when the battery SOC becomes equal to or less than the FC's start-up threshold $SOC_{\_rate}$, the control unit 6 causes to increase in stages the target generated power of the fuel cell stack 1 so as to lower the ratio of the fuel's remaining amount $H_{rest}$ to the battery SOC.

With this, the fuel's remaining amount $H_{rest}$ of the fuel cell stack 1 decreases in preference to the charged amount of the battery 9; and thus, the situation that the charged amount of the battery 9 becomes deficient under the state that the fuel is remaining can be suppressed.

Further, according to this embodiment, as shown in Fig. 5, when the battery SOC becomes larger than a specific FC's stop threshold $SOC_{\_reg}$, the control unit 6 causes the fuel cell stack 1 to stop the power generation thereof. And, the control unit 6 sets the FC's stop threshold $SOC_{\_reg}$ to the value greater than the FC's start-up threshold $SOC_{\_rate}$.

By so doing, because number of stop of power generation of the fuel cell stack 1 can be reduced, number of start-up of the fuel cell stack 1 can also be reduced with this. Accordingly, consumption of the fuel for heating-up not contributing to charging of the battery 9 can be suppressed, so that the fuel consumption of the fuel cell system 10 can be improved. In addition, as shown in Fig. 5, because a hysteresis is provided, repeat in start-up and stop of the fuel cell stack 1 does not readily occur, so that action of the fuel cell stack 1 can be stabilized.

In addition, according to this embodiment, as shown in Fig. 4, in Step S913 the control unit 6 calculates the running load history $P_{\_vehicle}$, which shows the change history of the power that is consumed in the load equipment 8. And, by using this running load history $P_{\_vehicle}$ the control unit 6 calculates in Step S914 the battery's discharge amount $S_{\_tartup}$ in the FC's start-up period, and also in Step S916 it calculates the battery's discharge amount $S_{\_assist}$ in the FC's rated power generation period. By using these calculation results, the control unit 6 calculates in Step S918 the FC's start-up threshold $SOC_{\_rate}$.

Namely, the control unit 6 corrects the FC's start-up threshold $SOC_{\_rate}$ in accordance with the change history of the load equipment 8 that is connected to the battery 9. With this, the start-up timing of the fuel cell stack 1 is quickened in accordance with an increase in the amount of the discharged power from the battery 9 to the load equipment 8; and thus, with facilitating the fuel consumption of the fuel cell stack 1, the situation that the charged amount of the battery 9 is deficient can be avoided more surely.

For example, as shown in Fig. 6, the control unit 6 raises the FC's start-up threshold $SOC_{\_rate}$ as the running load history $P_{\_vehicle}$ - this shows the moving average value of the power consumption of the load equipment 8 - increases.

With this, the start-up timing of the fuel cell stack 1 is quickened as the running load history $P_{vehicle}$ increases; and thus, the decrease in the charged amount of the battery 9 can be suppressed by reducing the remaining amount of the fuel. In addition, by using the moving average value of the power consumption of the load equipment 8, frequent change of the FC's start-up threshold $SOC_{rate}$ caused by change of the power consumption of the load equipment in short period of time can be avoided. Accordingly, the situation that start-up and stop of the fuel cell stack 1 are repeated can be suppressed.

In addition, according to this embodiment, in Step S915 the control unit 6 calculates the FC's rated power generation period $T_{rate}$ by using the consumption $H_{startup}$ of the fuel for heating-up that is supplied to the diffusion burner 352, the catalytic combustion burner 353, and the discharged gas burner 40 during the start-up period of the fuel cell stack 1. And, in Step S916 the control unit 6 calculates the battery's discharge amount $S_{assist}$ in the FC's rated power generation period $T_{rate}$, and by using this calculation result, calculates in Step S918 the FC's start-up threshold $SOC_{rate}$.

Namely, the control unit 6 corrects the FC's start-up threshold $SOC_{rate}$ to a lower value by using the consumption $H_{statup}$ of the fuel for heating-up that is necessary to start up the fuel cell stack 1. With this, the start-up timing of the fuel cell stack 1 is delayed, or even the start-up itself is suppressed; and thus, the start-up of the fuel cell stack 1 not contributing to charging of the battery 9 can be suppressed.

In addition, according to this embodiment, the control unit 6 obtains in Step S915 the FC's rated power generation period $T_{rate}$ during which the fuel cell stack 1 generates the power with the rated power $P_{rate}$ on the basis of the fuel's remaining amount $H_{rest}$; and in Step S916 it calculates in accordance with the power consumption of the load equipment 8 the battery's discharge amount $S_{assist}$ in the FC's rated power generation period $T_{rate}$. And further, control unit 6 calculates in Step S918 the FC's start-up threshold $SOC_{rate}$ by adding the battery's discharge amount $S_{assist}$ during the FC's rated power generation period to the offset value $SOC_{offset}$.

By causing the fuel cell stack 1 to generate the power with the rated power in the way as mentioned above, power supply from the battery 9 to the load equipment 8 is assisted to a maximum degree even if the vehicle's power consumption increases rapidly; and thus, deficient of the charged amount of the battery 9 can be suppressed. Further, by taking the offset value $SOC_{offset}$ into consideration in the FC's start-up threshold $SOC_{rate}$, the start-up timing of the fuel cell stack 1 is quickened; and thus, with facilitating the fuel consumption, output of the battery 9 can be ensured furthermore.

Also, according to this embodiment, as shown in Fig. 9, the control unit 6 sets the offset value $SOC_{offset}$ to a lower value as the battery margin increases larger, wherein this margin shows the difference between the battery's upper limit power and the vehicle's power consumption.

Namely, when there is an allowance in output of the battery 9, in order to suppress deficiency of the charged amount of the battery 9, the offset value $SOC_{offset}$ is made lower so that quickening of the start-up timing of the power generation of the fuel cell stack 1 more than necessary can be suppressed. With this, fuel consumption with poor efficiency in the fuel cell stack 1 can be suppressed, so that fuel consumption of the fuel cell system 10 can be improved.

Meanwhile, in this embodiment, in order to prioritize security of the charged amount of the battery 9, the example in which the fuel cell stack 1 is caused to generate the power with the rated power generation has been explained, wherein energy efficiency of the fuel cell system 10 decreases as the generated power of the fuel cell stack 1 increases. Therefore, it is hoped to suppress the generated power of the fuel cell stack 1 while ensuring the power of the battery 9. Accordingly, the next embodiment is provided with, in addition to the battery protective driving mode by the rated power generation of the fuel cell stack 1, the driving mode which prioritizes the fuel consumption wherein the fuel consumption of the fuel cell system 10 can be improved.

(Third Embodiment)

Fig. 11 is the explanatory figure showing the relationship between the target output power of the fuel cell system 10 and the charged amount of the battery 9 in the third embodiment of the present invention.

As shown in Fig. 11, in this embodiment, two driving sections, the battery protective driving section and the fuel consumption prioritized driving section, are configured.

The battery protective driving section is the same as the driving section of the fuel cell stack 1 from the lower limit value of the battery SOC to the threshold $SOC_{rate}$, as shown in Fig. 5. In the battery protective driving section, the control unit 6 prioritizes security of the charged amount of the battery 9 thereby setting the generated power of the fuel cell system 1 to the rated power $P_{rate}$. Meanwhile, in order to cause the fuel cell stack 1 to generate the power with the rated power $P_{rate}$, the temperature of the fuel cell stack 1 needs to be kept in the upper limit side in the temperature range in which the power can be generated.

The fuel consumption prioritized driving section $S_{fit}$ is configured in the battery SOC region which is higher than the drive switching threshold $SOC_{rate}$ which is a lower limit value of the battery protection driving section. In the fuel consumption prioritized driving section $S_{fit}$, in order to improve the fuel consumption of the fuel cell stack 1, the control unit 6 sets the target generated power of the fuel cell stack 1 to the high efficiency power value $P_{eco}$ which is lower than the rated power value $P_{rate}$. Meanwhile, the high efficiency power value $P_{eco}$ is set to the power value at which the energy efficiency of the fuel cell stack 1 is the highest under the condition that temperature of the fuel cell stack 1 is kept in the lower side in the temperature range in which the power can be generated.

In addition to the battery protective driving section, by setting the fuel consumption prioritized driving section $S_{fit}$ in the way as mentioned above, the number of start-up of the fuel cell stack 1 can be reduced, so that consumption of the fuel for heating-up used in the start-up control can be reduced. In addition, because number of the battery protective drive with poor energy efficiency during power generation operation of the fuel cell stack 1 can be reduced, the energy efficiency of the entire system can be enhanced so that the fuel consumption can be improved.

Fig. 12 is a conceptual figure with regard to the energy efficiency in the battery protective drive and the fuel consumption prioritized drive. Here, the horizontal axis shows the generated power of the fuel cell stack 1, and the vertical axis shows the energy efficiency of the fuel cell stack 1.

In the fuel consumption prioritized drive, the control unit 6 keeps the temperature of the fuel cell stack 1 in the lower limit side of the power generation capable temperature range, for example at 650°C, and causes the fuel cell stack 1 to generate the power such that the energy efficiency of the fuel cell stack 1 may be the high efficiency power value $P_{eco}$ which is the highest in the energy efficiency. Namely, the control unit 6 causes to supply to the fuel cell stack 1 the anode gas and the cathode gas with the respective flow rates necessary to carry out the power generation with the high efficiency power value $P_{eco}$. At the same time, the control unit 6 operates the DC-DC converter 51 so as to cause the fuel cell stack 1 to raise the voltage thereof until the power that is taken out from the fuel cell stack 1 to the battery 9 reaches the voltage value of the high efficiency power value $P_{eco}$.

In the battery protective drive, the control unit 6 causes to keep the temperature of the fuel cell stack 1 in the upper limit side of the power generation capable temperature range, for example at 750°C, and causes the fuel cell stack 1 to generate the power such that the generated power may be the rated power value $P_{rate}$ corresponding to the lower limit voltage of the fuel cell stack 1. Namely, the control unit 6 causes to supply to the fuel cell stack 1 the anode gas and the cathode gas with the respective flow rates necessary to generate the power with the rated power value $P_{rate}$. At the same time, the control unit 6 operates the DC-DC converter 51 so as to cause the fuel cell stack 1 to drop the voltage thereof until the power that is taken out from the fuel cell stack 1 to the battery 9 reaches the voltage value of the rated power value $P_{rate}$.

As mentioned above, when the battery SOC is more than the drive switching threshold $SOC_{rate}$, the control unit 6 causes to lower the temperature of the fuel cell stack 1 within the temperature range that the fuel cell stack 1 can generate the power, and also sets the generated power of the fuel cell stack 1 to a lower value. On the other hand, when the battery SOC becomes less than the drive switching threshold $SOC_{rate}$, the control unit 6 causes to raise the temperature of the fuel cell stack 1 within the temperature range that the fuel cell stack 1 can generate the power by using the fuel for heating-up, and also sets the generated power of the fuel cell stack 1 to a higher value.

Fig. 13 is an explanatory figure showing one example of the setting method to set the fuel consumption prioritized driving section $S_{fit}$. Here, the horizontal axis shows the running load history $P_{vehicle}$, and the vertical axis shows the fuel consumption prioritized driving section $S_{fit}$.

As shown in Fig. 13, as the running load history $P_{vehicle}$ increases, necessity to assist the output of the battery 9 by power generation of the fuel cell stack 1 increases, so that the fuel consumption prioritized driving section $S_{fit}$ is made larger.

Specifically, in the section from the high efficiency power $P_{eco}$ to the vehicle's rated power $P_{vehicle\_rate}$, the control unit 6 changes the fuel consumption prioritized driving section $S_{fit}$ in the range from the lower limit value $S_{fit\_L}$ to the upper limit value $S_{fit\_H}$ in accordance with the value of the running load history $P_{vehicle}$.

As mentioned above, when the vehicle's power consumption, which is the power consumption of the load equipment 8, increases, the control unit 6 expands the fuel consumption prioritized driving section $S_{fit}$ as compared with when the vehicle's power consumption is small. With this, the efficiency of power generation of the fuel cell stack 1 improves, so that the charged amount to the battery 9 from the fuel cell stack 1 increases, thereby the fuel consumption of the fuel cell system 10 can be improved.

Fig. 14 is a flow chart showing one example of the power generation control process carried out by Step S900 in this embodiment.

The power generation control process of this embodiment comprises processes of Steps S934, S935, and Steps S937 to S942 in place of the processes of Steps S914, S915, and Steps S917 to S920 shown in Fig. 4. Because the other processes are the same as the processes shown in Fig. 4, the explanation with regard to them is omitted while tagging with the same respective symbols as before.

In Step S934 the control unit 6 calculates the battery's discharge amount $S_{startup}$ in the FC's start-up period in accordance with the formula (1), in the same manner as the process of Step S914.

The FC's start-up period $T_{startup}$ of this embodiment is the value obtained by integrating the start-up period which is the time necessary to transfer from the stopping state of the fuel cell stack 1 to the fuel consumption prioritized drive and the warming-up period which is the time necessary to transfer from the fuel consumption prioritized drive to the battery protective drive. Specifically, the start-up period is the time necessary to raise the temperature of the fuel cell stack 1 to the temperature necessary to carry out the fuel consumption prioritized drive; and the warming-up period is the time necessary to raise the temperature of the fuel cell stack 1 from the temperature state of the fuel consumption prioritized drive to the temperature necessary to carry out the battery protective drive.

In Step S935 the control unit 6 calculates the FC's rated power generation period $T_{rate}$ in accordance with the formula (2), similarly to the process of Step S915.

The consumption $H_{startup}$ of the fuel for heating-up in this embodiment is set to the value which is obtained by adding the consumption of the start-up fuel necessary to raise the temperature of the fuel cell stack 1 to the action temperature of the fuel consumption prioritized drive and the consumption of the warm-up fuel necessary to warm up the fuel cell stack 1 till the action temperature of the battery protective drive from the temperature state of the fuel consumption prioritized drive.

Next, in Step S937 the control unit 6 sets the offset value $SOC_{offset}$ in order to ensure the output of the battery 9 in accordance with the battery margin, as shown in Fig. 9.

The first margin m1 in this embodiment is obtained by adding the high efficiency power $P_{eco}$ to the value obtained by subtracting the vehicle's rated power from the battery's upper limit output, as shown in Fig. 15. Also, the battery margin is obtained by adding the high efficiency power $P_{eco}$ to the value obtained by subtracting the running load history $P_{vehicle}$ from the battery's upper limit output when the battery SOC reaches the upper limit value $SOC_{offset\_H}$ of the offset value.

In Step P938 the control unit 6 sets the drive switching threshold $SOC_{rate}$ which determines the switch-over timing from the fuel consumption prioritized drive to the battery protective drive in accordance with the formula (4), similarly to the process of Step S918.

In Step S939 the control unit 6 sets the fuel consumption prioritized driving section $S_{fit}$ in accordance with the value of the running load history $P_{vehicle}$, as shown in Fig. 13.

In Step S940 the control unit 6 calculates the FC's start-up threshold $S_{eco}$ which determines the start-up timing of the fuel cell stack 1, as shown in the next formula (5).

$$[\text{Math. 8}]$$
$$SOC_{eco} = \min\left( SOC_{reg}, SOC_{rate} + S_{fit} \right) \qquad \cdots (5)$$

In Step S941 the control unit 6 sets the target generated power at the time when the battery SOC drops to the FC's start-up threshold $SOC_{eco}$ to the high efficiency power value $P_{eco}$, and the target generated power at the time when the battery SOC drops to the drive switching threshold $SOC_{rate}$ to the rated power value $P_{rate}$. When the process of Step S941 is over, the control unit 6 carries out the start-up control by Steps S100 to S104 shown in Fig. 2.

With this, when the battery SOC becomes the FC's start-up threshold $SOC_{eco}$, the control unit 6 causes to raise the temperature of the fuel cell stack 1 till the lower limit side in the range of the power generation capable temperature, and at the same time, causes to supply to the fuel cell stack 1 the cathode gas and the anode gas with the respective flow rates necessary to carry out the power generation with the high efficiency power $P_{eco}$.

And, when the battery SOC becomes equal to or less than the drive switching threshold $SOC_{rate}$, the control unit 6 causes to raise the temperature of the fuel cell stack 1 till the upper limit side in the range of the power generation capable temperature, and at the same time, causes to supply to the fuel cell stack 1 the cathode gas and the anode gas with the respective flow rates necessary to carry out the power generation with the rated power $P_{rate}$.

According to the third embodiment of the present invention, when the battery SOC (charged amount) becomes the FC's start-up threshold (first threshold) $SOC_{eco}$, the control unit 6 causes to carry out the fuel consumption prioritized drive. Namely, when the battery SOC decreases to the FC's start-up threshold $SOC_{eco}$, the control unit 6 causes the fuel cell stack 1 to start up so that the fuel cell stack 1 generates the power with the high efficiency power $P_{eco}$ which is lower than the rated power $P_{rate}$. With this, the energy efficiency of the fuel cell stack 1 is improved, so that the fuel consumption of the fuel cell system 10 can be improved.

Then, when the battery SOC becomes equal to or less than the drive switching threshold (second threshold) $SOC_{rate}$ which is less than the FC's start-up threshold $SOC_{eco}$, the control unit 6 switches over the driving state of the fuel cell stack 1 from the fuel consumption prioritized drive to the battery protective drive. Namely, when the battery SOC is decreased to the drive switching threshold $SOC_{rate}$, the control unit 6 causes to raise the temperature of the fuel cell stack 1 so as to increase the power generation of the fuel cell stack 1, as shown in Fig. 12. By so doing, with facilitating consumption of the remaining amount of the fuel, the charged amount of the battery 9 can be ensured.

If the charged amount of the battery 9 would run out before the remaining amount of the fuel, because the upper limit output of the battery 9 is more than the rated power $P_{rate}$ of the fuel cell stack 1, sufficient amount of the power cannot be supplied to the driving motor 81; and thus, it would be worried that over-discharge of the battery 9 to cause a decrease in the output performance thereof could take place. In addition, to charge the battery 9 by the generated power of the fuel cell stack 1 takes some time, so that before the vehicle can run there is some time necessary.

On the contrary, by configuring the battery protective driving section as shown in Fig. 11, the charged amount of the battery 9 can be secured after the remaining amount of the fuel is consumed, so that with suppressing the performance deterioration of the battery 9, decrease in the drivability can be suppressed.

In addition, according to this embodiment, in Step S935 the control unit 6 calculates the FC's rated power generation period $T_{\_rate}$ by using the consumption $H_{startup}$ of the fuel for heating-up which is necessary for starting-up and warming-up of the fuel cell stack 1. On the basis of this FC's rated power generation period $T_{\_rate}$, the drive switching threshold $SOC_{\_rate}$ and the FC's start-up threshold $SOC_{\_eco}$ are calculated.

Accordingly, because the drive switch-over timing from the fuel consumption prioritized drive to the battery protective drive as well as the start-up timing are corrected, the fuel cell stack 1 can be accurately started up so as to switch over to the battery protective drive without causing deficiency of the charged amount in the battery 9.

In addition, according to this embodiment, as shown in Fig. 13, as the running load history $P_{\_vehicle}$ increases, the fuel consumption prioritized driving section $S_{\_fit}$ is expanded. Namely, as the power consumption of the load equipment 8 connected to the battery 9 increases, the section from the FC' start-up threshold $SOC_{\_eco}$ to the drive switching threshold $SOC_{\_rate}$ is expanded.

With this, the start-up timing of the fuel cell stack 1 is quickened thereby prolonging the period wherein the power generation is carried out under the state that the energy efficiency of the fuel cell stack 1 is high; and thus, amount of power supply from the fuel cell stack 1 to the battery 9 can be increased, and the fuel consumption of the fuel cell system 10 can be improved as well.

Meanwhile, in this embodiment, explanation has been made with regard to the example in which the fuel cell stack 1 is caused to generate a power at two driving points in accordance with the value of the battery SOC; however, the way thereof is not limited to this. For example, three or more driving points may be set in the fuel cell stack 1, wherein the control unit 6 controls such that the generated power of the fuel cell stack 1 is decreased in stages as the battery SOC decreases. Even in this way, the energy efficiency of the fuel cell stack 1 can be improved as compared with the second embodiment.

(Fourth Embodiment)

Fig. 16 is a composition figure showing one composition example of a fuel cell system 11 provided with a polymer electrolyte fuel cell.

The fuel cell system 11 supplies a power to the driving motor 81 arranged in load equipment 8a and to an assistant battery 9a which assists a power of the fuel cell stack 1.

The fuel cell system 11 comprises a fuel cell stack 1a which is a laminate of plural polymer electrolyte fuel cells, a fuel supply equipment 2a, an oxidant supply equipment 3a, a power converter 5a, and a control unit 6a which controls supply flow rates of the anode gas and the cathode gas to the fuel cell stack 1a on the basis of a request power of the driving motor 81.

The fuel supply equipment 2a comprises a high pressure tank 20a which stores the anode gas at a high pressure, an anode gas supply path 22a, an anode pressure control valve 23a to control an anode gas pressure, a purge valve 24a to discharge the anode off-gas, and an anode gas discharge path 29a.

The oxidant supply equipment 3a comprises a filter 30a, a compressor 32a, a cathode gas supply path 33a, a cathode pressure control valve 34a to control a cathode gas pressure, and a cathode gas discharge path 39a. The power converter 5a comprises the DC-DC converter 51 to supply the generated power of the fuel cell system 11 to the load equipment 8a or to the assistant battery 9a.

In the fuel cell system 11 like this, too, the control unit 6a acquires the battery SOC from the charged amount sensor 61; and as shown in Step S100 of Fig. 2, when the battery SOC becomes equal to or less than the FC's start-up threshold, it causes the fuel cell stack 1a to start up. And, the control unit 6a acquires from the fuel amount sensor 62 the remaining amount of the fuel that can be supplied to the fuel cell stack 1a; and as shown in Step S903 of Fig. 3, when the remaining amount of the fuel becomes small, it sets the FC's start-up threshold to a lower value as compared with when the remaining amount of the fuel is large.

According to the fourth embodiment of the present invention, similarly to the first to third embodiments, start-up of the fuel cell stack 1a can be suppressed, so that consumption of the fuel for heating-up not contributing to charging of the battery 9a can be suppressed. Accordingly, fuel consumption of the fuel cell system 11 can be improved with ensuring the output of the battery 9a.

As mentioned above, in all the embodiments, start-up of the fuel cell is suppressed when the remaining amount of the fuel is small relative to the charged amount of the secondary battery, so that useless consumption of the fuel can be suppressed. On the other hand, under the circumstance that shortage of the charged amount of the secondary battery can readily happen, power generation of the fuel cell increases, so that the shortage in the charged amount of the secondary battery can be covered. Therefore, over-discharge of the battery does not readily take place, so that the situation that the battery performance is damaged can be suppressed.

In the above description, embodiments of the present invention have been explained. However, the embodiments described above are mere partial examples of the application of the present invention; and thus, the description does not intend to limit the scope of the present invention within the specific composition of these embodiments.

For example, the control unit 6 carries out the power generation control process of Step S900 shown in Fig. 2 during start-up control of the fuel cell stack 1; however, this process may be carried out during power generation operation or stop control of the fuel cell stack 1. Or, the control unit 6 may always renew the thresholds $SOC_{rate}$ and $SOC_{eco}$ during the period from start-up to stop of the fuel cell system 10. By so doing, the same results as those of the above embodiments can be obtained.

Meanwhile, the embodiments mentioned above may be arbitrarily combined.

**Claims**

1. A method for controlling a fuel cell system (10), wherein
   the method is a method for controlling a fuel cell system (10) in which a fuel and an oxidant are supplied to a fuel cell (1) and a generated power from the fuel cell (1) is outputted to a secondary battery (9), the method comprising:

   a charged amount acquisition step in which a charged amount of the secondary battery (9) is acquired,
   a power generation control step in which when the charged amount of the secondary battery (9) becomes equal to or less than a prescribed value, the fuel cell (1) is started up from a state that the fuel cell (1) stops power generation, or the generated power of the fuel cell (1) is increased, and
   a fuel amount acquisition step in which a remaining amount of the fuel which can be supplied to the fuel cell (1) is acquired,
   **characterized by** further comprising:
   a setting step in which when the remaining amount of the fuel becomes small, the prescribed value is set to a smaller value as compared with when the remaining amount of the fuel is large.

2. The method for controlling a fuel cell system (10) according to claim 1, wherein
   the power generation control step sets, when the charged amount of the secondary battery (9) becomes equal to or less than the prescribed value, the generated power of the fuel cell (1) to a higher value as compared with when the charged amount is more than the prescribed value.

3. The method for controlling a fuel cell system (10) according to claim 1 or 2, wherein
   the power generation control step increases the generated power of the fuel cell (1) in stages such that a ratio of the remaining amount of the fuel to the charged amount of the secondary battery (9) may decrease.

4. The method for controlling a fuel cell system (10) according to any one of claims 1 to 3, wherein
   the power generation control step stops power generation of the fuel cell (1) when the charged amount of the secondary battery (9) becomes more than a specific threshold, and
   the setting step sets the specific threshold to a value higher than the prescribed value.

5. The method for controlling a fuel cell system (10) according to any one of claims 1 to 4, wherein
   the setting step calculates the prescribed value in accordance with a change history of a load (8) which is connected to the secondary battery (9).

6. The method for controlling a fuel cell system (10) according to claim 5, wherein
   the setting step raises the prescribed value higher as a moving average value of the load (8) increases more.

7. The method for controlling a fuel cell system (10) according to claim 5 or 6, wherein
   the setting step corrects the prescribed value in accordance with a consumed amount of the fuel necessary to start up or warm up the fuel cell (1).

8. The method for controlling a fuel cell system (10) according to claim 7, wherein
   the setting step
   obtains a power generation period by a rated power generation of the fuel cell (1) on a basis of the remaining amount of the fuel, and calculates a discharge amount of the secondary battery (9) in the power generation period in accordance with a value of the load (8), and
calculates the prescribed value by adding a prescribed offset value to the discharge amount of the secondary battery (9).

9. The method for controlling a fuel cell system (10) according to claim 8, wherein
the setting step sets the prescribed offset value to a lower value as a difference between an upper limit output of the secondary battery (9) and a consumed power of the load (8) becomes larger.

10. The method for controlling a fuel cell system (10) according to any one of claims 1 to 9, wherein
the power generation control step
causes the fuel cell (1) to start up the fuel cell (1) thereby causing the fuel cell (1) to generate a power when the charged amount of the secondary battery (9) decreased to a first threshold which is larger than the prescribed value, and
causes to increase the generated power of the fuel cell (1) by raising a temperature of the fuel cell (1) when the charged amount of the secondary battery (9) decreased to a second threshold which is the prescribed value; and
the setting step expands a section between the first threshold and the second threshold as the load (8) of the secondary battery (9) increases.

11. A fuel cell system, comprising:

a fuel cell (1) which is connected to a secondary battery (9) and configured to generates a power in accordance with a state of the secondary battery (9),
gas supply equipment (2, 3) configured to supply a fuel and an oxidant to the fuel cell (1),
a sensor (61) configured to detect a charged amount of the secondary battery (9), and
a controller (6) configured to cause the fuel cell (1) start up from a state that the fuel cell (1) is stopping power generation or to cause a generated power of the fuel cell (1) to increase, when the charged amount of the secondary battery (9) becomes equal to or less than a prescribed value,
**characterized in that**
the controller (6) is configured to set, when a remaining amount of the fuel stored in the gas supply equipment (2,3) decreases, the prescribed value to a smaller value as compared with when the remaining amount of the fuel is large.

**Patentansprüche**

1. Verfahren zum Steuern eines Brennstoffzellen-Systems (10) wobei
das Verfahren ein Verfahren zum Steuern eines Brennstoffzellensystems (10) ist, in dem ein Brennstoff und ein Oxidant einer Brennstoffzelle (1) zugeführt werden und ein von der Brennstoffzelle (1) erzeugter Strom an eine Sekundärbatterie (9) ausgegeben wird, wobei das Verfahren umfasst:

einen Schritt zur Erfassung eines Ladungsstandes, in dem ein Ladungsstand der Sekundärbatterie (9) erfasst wird,
einen Schritt zur Steuerung von Stromerzeugung, in dem, wenn der Ladungsstand der Sekundärbatterie (9) einen vorgeschriebenen Wert erreicht oder unterschreitet, die Brennstoffzelle (1) von einem Zustand ausgehend gestartet wird, in dem die Brennstoffzelle (1) Stromerzeugung unterbricht, oder der erzeugte Strom der Brennstoffzelle (1) erhöht wird, sowie
einen Schritt zur Erfassung einer Brennstoff-Menge, in dem eine verbleibende Menge des Brennstoffs erfasst wird, der der Brennstoffzelle (1) zugeführt werden kann,
**dadurch gekennzeichnet, dass** es des Weiteren umfasst:
einen Einstell-Schritt, in dem, wenn die verbleibende Menge des Brennstoffs gering wird, der vorgeschriebene Wert auf einen Wert eingestellt wird, der niedriger ist als dann, wenn die verbleibende Menge des Brennstoffs groß ist.

2. Verfahren zum Steuern eines Brennstoffzellen-Systems (10) nach Anspruch 1, wobei in dem Schritt zur Steuerung von Stromerzeugung, wenn der Ladungsstand der Sekundärbatterie (9) den vorgeschriebenen Wert erreicht oder unterschreitet, der erzeugte Strom der Brennstoffzelle (1) auf einen Wert eingestellt wird, der höher ist als dann, wenn der Ladungsstand größer ist als der vorgeschriebene Wert.

3. Verfahren zum Steuern eines Brennstoffzellen-Systems (10) nach Anspruch 1 oder 2, wobei
in dem Schritt zur Steuerung von Stromerzeugung der erzeugte Strom der Brennstoffzelle (1) in Stufen so erhöht wird, dass ein Verhältnis der verbleibenden Menge des Brennstoffs zu dem Ladungsstand der Sekundärbatterie (9) abnehmen kann.

4. Verfahren zum Steuern eines Brennstoffzellen-Systems (10) nach einem der Ansprüche 1 bis 3, wobei
in dem Schritt zur Steuerung von Stromerzeugung Stromerzeugung der Brennstoffzelle (1) unterbrochen wird, wenn der Ladungsstand der Sekundärbatterie (9) einen bestimmten Schwellenwert überschreitet, und
in dem Einstell-Schritt der bestimmte Schwellenwert auf einen Wert eingestellt wird, der höher ist als der vorgeschriebene Wert.

5. Verfahren zum Steuern eines Brennstoffzellen-Systems (10) nach einem der Ansprüche 1 bis 4, wobei
in dem Einstell-Schritt der vorgeschriebene Wert entsprechend einem Änderungs-Verlauf einer Last (8) berechnet wird, die mit der Sekundärbatterie (9) verbunden ist.

6. Verfahren zum Steuern eines Brennstoffzellen-Systems (10) nach Anspruch 5, wobei
in dem Einstell-Schritt der vorgeschriebene Wert stärker angehoben wird, wenn ein gleitender Mittelwert der Last (8) weiter zunimmt.

7. Verfahren zum Steuern eines Brennstoffzellen-Systems (10) nach Anspruch 5 oder 6, wobei
in dem Einstell-Schritt der vorgeschriebene Wert entsprechend einer Verbrauchsmenge des Brennstoffs korrigiert wird, die zum Starten oder Vorwärmen der Brennstoffzelle (1) erforderlich ist.

8. Verfahren zum Steuern eines Brennstoffzellen-Systems (10) nach Anspruch 7, wobei
in dem Einstell-Schritt
eine Stromerzeugungs-Periode anhand einer Nenn-Stromerzeugung der Brennstoffzelle (1) auf Basis der verbleibenden Menge des Brennstoffs ermittelt wird und ein Entladungsstand der Sekundärbatterie (9) in der Stromerzeugungs-Periode entsprechend einem Wert der Last (8) berechnet wird, und
der vorgeschriebene Wert berechnet wird, indem ein vorgeschriebener Offset-Wert zu dem Entladungsstand der Sekundärbatterie (9) addiert wird.

9. Verfahren zum Steuern eines Brennstoffzellen-Systems (10) nach Anspruch 8, wobei
in dem Einstell-Schritt der vorgeschriebene Offset-Wert auf einen niedrigeren Wert eingestellt wird, wenn eine Differenz zwischen einer Obergrenzen-Abgabe der Sekundärbatterie (9) und einem Stromverbrauch der Last (8) größer wird.

10. Verfahren zum Steuern eines Brennstoffzellen-Systems (10) nach einem der Ansprüche 1 bis 9, wobei
in dem Schritt zur Steuerung von Stromerzeugung
die Brennstoffzelle (1) veranlasst wird, die Brennstoffzelle (1) zu starten, und so die Brennstoffzelle (1) veranlasst wird, einen Strom zu erzeugen, wenn der Ladungsstand der Sekundärbatterie (9) auf einen ersten Schwellenwert abgenommen hat, der über dem vorgeschriebenen Wert liegt, und
veranlasst wird, dass der erzeugte Strom der Brennstoffzelle (1) erhöht wird, indem eine Temperatur der Brennstoffzelle (1) angehoben wird, wenn der Ladungsstand der Sekundärbatterie (9) auf einen zweiten Schwellenwert abgenommen hat, der der vorgeschriebene Wert ist; und
in dem Einstell-Schritt ein Abschnitt zwischen dem ersten Schwellenwert und dem zweiten Schwellenwert erweitert wird, wenn die Last (8) der Sekundärbatterie (9) zunimmt.

11. Brennstoffzellen-System, das umfasst:

eine Brennstoffzelle (1), die mit einer Sekundärbatterie (9) verbunden und so eingerichtet ist, dass sie einen Strom entsprechend einem Zustand der Sekundärbatterie (9) erzeugt,
eine Gaszufuhr-Einrichtung (2, 3), die so eingerichtet ist, dass sie der Brennstoffzelle (1) einen Brennstoff und ein Oxidant zuführt,
einen Sensor (61), der so eingerichtet ist, dass er einen Ladungsstand der Sekundärbatterie (9) erfasst, sowie
eine Steuerungseinrichtung (6), die so eingerichtet ist, dass sie die Brennstoffzelle (1) veranlasst, von einem Zustand ausgehend zu starten, in dem die Brennstoffzelle (1) Stromerzeugung unterbricht, oder veranlasst, dass ein erzeugter Strom der Brennstoffzelle (1) zunimmt, wenn der Ladungsstand der Sekundärbatterie (9) einen vorgeschriebenen Wert erreicht oder unterschreitet,

**EP 3 396 764 B1**

**dadurch gekennzeichnet, dass**
die Steuerungseinrichtung (6) so eingerichtet ist, dass sie, wenn eine verbleibende Menge des in der Gaszufuhr-Einrichtung (2, 3) gespeicherten Brennstoffs abnimmt, den vorgeschriebenen Wert auf einen Wert einstellt, der niedriger ist als dann, wenn die verbleibende Menge des Brennstoffs groß ist.

**Revendications**

1. Procédé de commande d'un système de pile à combustible (10), dans lequel le procédé est un procédé de commande d'un système de pile à combustible (10) dans lequel un combustible et un oxydant sont fournis à une pile à combustible (1) et une puissance générée à partir de la pile à combustible (1) est délivrée en sortie dans une batterie secondaire (9), le procédé comprenant :

   une étape d'acquisition de quantité chargée dans laquelle une quantité chargée de la batterie secondaire (9) est acquise,
   une étape de commande de génération de puissance dans laquelle, lorsque la quantité chargée de la batterie secondaire (9) devient égale ou inférieure à une valeur prescrite, la pile à combustible (1) est démarrée à partir d'un état où la pile à combustible (1) arrête la génération de puissance, ou la puissance générée de la pile à combustible (1) est augmentée, et
   une étape d'acquisition de quantité de combustible dans laquelle une quantité restante de combustible qui peut être fournie à la pile à combustible (1) est acquise,
   **caractérisé en ce qu'**il comprend en outre :
   une étape de réglage dans laquelle, lorsque la quantité restante de combustible devient petite, la valeur prescrite est établie à une valeur plus petite par comparaison au moment où la quantité restante du combustible est grande.

2. Procédé de commande d'un système de pile à combustible (10) selon la revendication 1, dans lequel l'étape de commande de génération de puissance établit, lorsque la quantité chargée de la batterie secondaire (9) devient égale ou inférieure à la valeur prescrite, la puissance générée de la pile à combustible (1) à une valeur supérieure par comparaison au moment où la quantité chargée est plus grande que la valeur prescrite.

3. Procédé de commande d'un système de pile à combustible (10) selon la revendication 1 ou 2, dans lequel l'étape de commande de génération de puissance augmente la puissance générée de la pile à combustible (1) par paliers de telle sorte qu'un rapport entre la quantité restante du combustible et la quantité chargée de la batterie secondaire (9) peut diminuer.

4. Procédé de commande d'un système de pile à combustible (10) selon l'une quelconque des revendications 1 à 3, dans lequel
   l'étape de commande de génération de puissance arrête la génération de puissance de la pile à combustible (1) lorsque la quantité chargée de la batterie secondaire (9) devient plus grande qu'un seuil spécifique, et
   l'étape de réglage établit le seuil spécifique à une valeur supérieure à la valeur prescrite.

5. Procédé de commande d'un système de pile à combustible (10) selon l'une quelconque des revendications 1 à 4, dans lequel
   l'étape de réglage calcule la valeur prescrite en fonction d'un historique de changements d'une charge (8) qui est connectée à la batterie secondaire (9).

6. Procédé de commande d'un système de pile à combustible (10) selon la revendication 5, dans lequel l'étape de réglage augmente la valeur prescrite à une valeur supérieure lorsqu'une valeur moyenne mobile de la charge (8) augmente davantage.

7. Procédé de commande d'un système de pile à combustible (10) selon la revendication 5 ou 6, dans lequel l'étape de réglage corrige la valeur prescrite en fonction d'une quantité consommée du combustible nécessaire pour faire démarrer ou chauffer la pile à combustible (1).

8. Procédé de commande d'un système de pile à combustible (10) selon la revendication 7, dans lequel l'étape de réglage
   obtient une période de génération de puissance par une génération de puissance nominale de la pile à combustible (1) sur la base de la quantité restante de combustible, et calcule une quantité de décharge de la batterie secondaire (9) pendant la période de génération de puissance en fonction d'une valeur de la charge (8), et calcule la valeur prescrite en ajoutant une valeur de décalage prescrite à la quantité de décharge de la batterie secondaire (9).

9. Procédé de commande d'un système de pile à combustible (10) selon la revendication 8, dans lequel l'étape de réglage établit la valeur de décalage prescrite à une valeur inférieure en lorsqu'une différence entre une sortie limite supérieure de la batterie secondaire (9) et une puissance consommée de la charge (8) devient plus grande.

10. Procédé de commande d'un système de pile à combustible (10) selon l'une quelconque des revendications 1 à 9, dans lequel
l'étape de commande de génération de puissance
amène la pile à combustible (1) à démarrer la pile à combustible (1), amenant ainsi la pile à combustible (1) à générer une puissance lorsque la quantité chargée de la batterie secondaire (9) a diminué jusqu'à un premier seuil qui est plus grand que la valeur prescrite, et
amène une augmentation de la puissance générée de la pile à combustible (1) en augmentant une température de la pile à combustible (1) lorsque la quantité chargée de la batterie secondaire (9) a diminué jusqu'à un second seuil qui est la valeur prescrite ; et
l'étape de réglage élargit une section entre le premier seuil et le second seuil lorsque la charge (8) de la batterie secondaire (9) augmente.

11. Système de pile à combustible, comprenant :

une pile à combustible (1) qui est connectée à une batterie secondaire (9) et configurée pour générer une puissance conformément à un état de la batterie secondaire (9),
un équipement d'alimentation en gaz (2, 3) configuré pour alimenter un combustible et un comburant dans la pile à combustible (1),
un capteur (61) configuré pour détecter une quantité chargée de la batterie secondaire (9), et
un dispositif de commande (6) configuré pour amener la pile à combustible (1) à démarrer à partir d'un état où la pile à combustible (1) arrête la génération de puissance ou pour amener une puissance générée de la pile à combustible (1) à augmenter, lorsque la quantité chargée de la batterie secondaire (9) devient égale ou inférieure à une valeur prescrite,
**caractérisé en ce que**
le dispositif de commande (6) est configuré pour établir, lorsqu'une quantité restante du combustible stockée dans l'équipement d'alimentation en gaz (2,3) diminue, la valeur prescrite à une valeur plus petite par comparaison au moment où la quantité restante de combustible est grande.

Fig. 1

10 : Fuel cell system

# Fig. 2

```
        ┌─────────────────────┐
        │      Start of        │
        │  start-up control    │
        └─────────────────────┘
                   │
                   ▼
        ┌─────────────────────┐
        ║  Power generation   ║──S900
        ║   control process   ║
        └─────────────────────┘
                   │
   蚼蚾   ┌─────────┘
        │          ▼
        │   ⬡─────────────────⬡
        └──╱ Battery's charged amount ╲──S100
           ╲ ⊙FC's start-up threshold? ╱
            ⬡─────────────────⬡
                   │ 蛇蚳蛆
                   ▼
        ┌─────────────────────┐
        │ Start-up of compressor │──S101
        └─────────────────────┘
                   │
                   ▼
        ┌─────────────────────┐
        │  Start-up of pump and │──S102
        │   diffusion burner    │
        └─────────────────────┘
                   │
   蚼蚾   ┌─────────┘
        │          ▼
        │   ⬡─────────────────⬡
        └──╱ Does temperature of fuel ╲──S103
           ╲ cell stack reach action  ╱
            ╲    temperature?        ╱
             ⬡─────────────────⬡
                   │ 蛇蚳蛆
                   ▼
        ┌─────────────────────┐
        │  Supply of anode gas  │──S104
        │   to fuel cell stack  │
        └─────────────────────┘
                   │
                   ▼
        ┌─────────────────────┐
        │      End of          │
        │  start-up control    │
        └─────────────────────┘
```

Fig. 3

S900

```
        ┌─────────────────────┐
        │  Power generation   │
        │   control process   │
        └─────────────────────┘
                  │
                  ▼
    ┌───────────────────────────┐  S901
    │  Acquisition of battery's  │
    │     charged amount         │
    └───────────────────────────┘
                  │
                  ▼
    ┌───────────────────────────┐  S902
    │ Acquisition of fuel remaining │
    │   amount of fuel cell stack   │
    └───────────────────────────┘
                  │
                  ▼
    ┌───────────────────────────┐  S903
    │ When fuel remaining amount │
    │ becomes small, set FC's start- │
    │ up threshold to smaller value │
    │  than when fuel remaining  │
    │      amount is large       │
    └───────────────────────────┘
                  │
                  ▼
        ┌─────────────────────┐
        │       Return        │
        └─────────────────────┘
```

# Fig. 4

S900

**Power generation control process**

Acquisition of battery SOC as battery' charged amount — S911

Acquisition of fuel remaining amount $H_{rest}$ of fuel cell — S912

Calculation of running load history $P_{\_vehicle}$ by acquisition of vehicle's power consumption — S913

Calculation of discharge amount $S_{\_startup}$ in FC's start-up period on the basis of $P_{\_vehicle}$ and FC's auxiliary equipment power $P_{\_fm}$ — S914

Calculation of FC's rated power generation period $T_{\_rate}$ on the basis of $H_{rest}$ — S915

Calculation of discharge amount $S_{\_assist}$ in FC's rated power generation period on the basis of $P_{\_vehicle}$ and $T_{\_rate}$ — S916

Setting of offset value $SOC_{\_offset}$ for battery protection — S917

Calculation of FC's start-up threshold $SOC_{\_rate}$ — S918

Setting of target generated power of fuel cell to rated power value $P_{\_rate}$ — S919

**Return**

Fig. 5

Fig. 6

Fig. 7

Fig. 8

Fig. 9

Fig. 10

Battery's upper limit output [W]

SOC_offset

Battery SOC [%]

蚖蛏蚗

Power [W]

m1

Battery's upper limit output

Vehicle's rated power

蚖蛐蚗

Fig. 11

Fig. 12

Fig. 13

Fig. 14   S900

**Power generation control process**

↓

Acquisition of battery SOC as battery' charged amount  —S911

↓

Acquisition of fuel remaining amount $H_{rest}$ of fuel cell  —S912

↓

Calculation of running load history $P_{\_vehicle}$ by acquisition of vehicle's power consumption  —S913

↓

Calculation of discharge amount $S_{\_startup}$ in FC's start-up period on the basis of $P_{\_vehicle}$ and FC's auxiliary equipment power $P_{\_fm}$  —S934

↓

Calculation of FC's rated power generation period $T_{\_rate}$ on the basis of $H_{rest}$  —S935

↓

Calculation of discharge amount $S_{\_assist}$ in FC's rated power generation period on the basis of $P_{\_vehicle}$ and $T_{\_rate}$  —S916

↓

Setting of offset value $SOC_{\_offset}$ for battery protection  —S937

↓

Calculation of drive switching threshold $SOC_{\_rate}$ to battery protective drive  —S938

↓

Setting of fuel consumption prioritized driving section $S_{\_fit}$  —S939

↓

Calculation of FC's start-up threshold $SOC_{\_eco}$  —S940

↓

Setting of target generated power of fuel consumption prioritized drive to high efficiency power value $P_{\_eco}$, and setting of target generated power of battery protective drive to rated power value $P_{\_rate}$  —S941

↓

**Return**

Fig. 15

Battery's
upper limit
output

FC high efficiency
generated power

Vehicle's
rated power

Fig. 16

11 : Fuel cell system

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2014113162 A1
- US 2006113129 A1
- EP 2385572 A1
- JP 2012253948 A